# EUROPEAN PATENT APPLICATION

(11) **EP 1 445 715 A1**
(43) Date of publication of application: **11.08.2004**
(21) Application number: 02775525.5
(22) Date of filing: 12.11.2002
(51) Int. Cl.: G06F 17/60

(54) **INFORMATION PROCESSING APPARATUS AND METHOD, AND INFORMATION PROCESSING SYSTEM AND METHOD**

(30) Priority: 13.11.2001 JP 2001347122
(71) Applicant: Sony Corporation, Tokyo 141-0001 (JP)
(72) Inventor: Kato, Yoshikazu, Shinagawa-ku, Tokyo 141-0001 (JP)
(74) Representative: Körber, Martin, Dipl.-Phys.
(86) International application number: PCT/JP2002/011755
(87) International publication number: WO 2003/042880

(57) **Abstract**

The invention relates to an information processing apparatus and the method thereof, and an information processing system and the method thereof for allowing users to browse through and purchase electronic books with ease. Electronic book data are given a header which describes illustratively "<Shidokupage> 200 page </Shidokupage>" on, say, line 4 indicating that a browsable page count is 200; <"Shidoku 1 time> 15 min </Shidoku 1 time>" on line 5 signifying that a one-shot browsing time is 15 minutes; and "<Shidoku total time> 45 min </Shidoku total time> saying that a total browsing time for the electronic book is 45 minutes. The inventive setup controls a browsing display of a desired electronic book on the user's terminal based on such information about the browsable page count, one-shot browsing time, and total browsing time.

## Description

### TECHNICAL FIELD

The present invention relates to an information processing apparatus and the method thereof, and an information processing system and the method thereof. More particularly, the invention relates to an information processing apparatus and the method thereof, and an information processing system and the method thereof for allowing users to browse through and purchase electronic books with ease.

### BACKGROUND ART

Electronic books and publications composed of text data are finding widespread acceptance in the general public. As opposed to books in paper form, electronic books are read on a suitable electronic book browsing terminal that typically displays in a double-page spread format the text data mostly representing recorded characters of a particular book. Operating on an appropriate button causes the picture on display to scroll one page at a time. That is, the electronic book is displayed and manipulated as if its physical counterpart were shown and turned page by page.

When purchasing a paper book, people generally browse through the candidate book or books found on a specific shelf of a bookstore they drop in. They purchase the book in question only if convinced through browsing that the book is worth reading.

Meanwhile, when a user tries to purchase any electronic book that is by definition not found at the bookstore, the user utilizes his or her terminal equipment first to gain access to the server of an online bookstore selling electronic books and publications. The user then downloads a sample part of the text data constituting a candidate electronic book, and browses through the partial text to decide whether or not to buy that particular book.

One disadvantage of the above procedure of online browsing is that the sample of each electronic book offered for browsing is a predetermined fixed part. In other words, even if the user wants to browse through, say, Chapter 5 of a particular electronic book, the user cannot read any portion of that chapter because the part of the book offered as the sample is typically found in Chapter 1. However desirous of buying the electronic book, the user is unable to decide whether to make the purchase due to the unavailability of further scrutiny of the book in question.

Another disadvantage of the procedure above is that when the user decides to purchase an electronic book after browsing through its sample, the entire text data for the book need to be downloaded in addition to the sample text data already downloaded. The sample text data, now redundant, remain intact on the storage medium of the terminal and take up storage resources unnecessarily.

### DISCLOSURE OF INVENTION

The present invention has been made in view of the above circumstances and is provided for allowing the user (reader) to browse through an entire electronic book under certain conditions before making the purchase in easily executable steps.

In carrying out the invention and according to one aspect thereof, there is provided a first information processing apparatus for delivering electronic book data to a second information processing apparatus over a network, the first information processing apparatus including: a browsing display control data supplementing element for supplementing the electronic book data with browsing display control data for controlling a browsing display of the electronic book data on the second information processing apparatus; a first encrypting element for encrypting the electronic book data supplemented with the browsing display control data, using a first key set uniquely for the electronic book data; a second encrypting element for encrypting the first key using a second key set uniquely for the second information processing apparatus; and a delivering element for delivering to the second information processing apparatus the electronic book data supplemented with the browsing display control data and encrypted using the first key, together with the first key encrypted using the second key.

The browsing display control data may preferably include control data for controlling a browsable page count, a one-shot browsing time, or a total browsing time for the browsing display of the electronic book data on the second information processing apparatus. If any one of the browsable page count, the one-shot browsing time, and the total browsing time is exceeded during the browsing display, the control data may preferably restrict the browsing display of the electronic book data on the second information processing apparatus.

The first information processing apparatus may further include: a purchase request receiving element for receiving purchase request information about the electronic book data from the second information processing apparatus requesting the purchase of the electronic book data; a selling element for performing a selling process based on the purchase request; and a third key transmitting element for transmitting to the second information processing apparatus a third key for canceling the restriction of the browsing display on the second information processing apparatus.

According to another aspect of the invention, there is provided a first information processing method for use with a first information processing apparatus for delivering electronic book data to a second information processing apparatus over a network. The first information processing method includes the steps of: supplementing the electronic book data with browsing display control data for controlling a browsing display of the electronic book data on the second information processing apparatus; encrypting firstly the electronic book data supplemented with the browsing display control data, using a first key set uniquely for the electronic book data; encrypting secondly the first key using a second key set uniquely for the second information processing apparatus; and delivering to the second information processing apparatus the electronic book data supplemented with the browsing display control data and encrypted using the first key, together with the first key encrypted using the second key.

According to a further aspect of the invention, there is provided a first program for use with a computer which controls a first information processing apparatus for delivering electronic book data to a second information processing apparatus over a network. The program causes the computer to execute the steps of: supplementing the electronic book data with browsing display control data for controlling a browsing display of the electronic book data on the second information processing apparatus; encrypting firstly the electronic book data supplemented with the browsing display control data, using a first key set uniquely for the electronic book data; encrypting secondly the first key using a second key set uniquely for the second information processing apparatus; and delivering to the second information processing apparatus the electronic book data supplemented with the browsing display control data and encrypted using the first key, together with the first key encrypted using the second key.

According to an even further aspect of the invention, there is provided a second information processing apparatus for receiving delivery of electronic book data from another information processing apparatus over a network, the second information processing apparatus including: a browsing display giving element for giving a browsing display of the electronic book data; a first receiving element for receiving the electronic book data supplemented with browsing control data for controlling the browsing display and encrypted using a first key; a second receiving element for receiving the first key encrypted using a second key; a first decrypting element for decrypting the first key using the second key; and a second decrypting element for decrypting the encrypted electronic book data supplemented with the browsing control data, using the first key decrypted by the first decrypting element. The browsing display giving element gives the browsing display of the electronic book data based on the decrypted browsing control data.

The browsing control data may preferably include control data for controlling a browsable page count, a one-shot browsing time, or a total browsing time for the browsing display of the electronic book data. If any one of the browsable page count, the one-shot browsing time, and the total browsing time is exceeded during the browsing display, the browsing display giving element may preferably restrict the browsing display of the electronic book data.

The second information processing apparatus may further include: a purchase request information transmitting element for transmitting purchase request information about the electronic book data to the other information processing apparatus; and a third key receiving element for receiving from the other information processing apparatus a third key for canceling the restriction of the browsing display upon completion of a purchasing process following the transmission of the purchase request information. The browsing display giving element cancels the restriction of the browsing display using the third key.

According to a still further aspect of the invention, there is provided a second information processing method for use with a first information processing apparatus for receiving delivery of electronic book data from a second information processing apparatus over a network, the second information processing method including the steps of: giving a browsing display of the electronic book data; receiving firstly the electronic book data supplemented with browsing control data for controlling the browsing display and encrypted using a first key; receiving secondly the first key encrypted using a second key; decrypting firstly the first key using the second key; and decrypting secondly the encrypted electronic book data supplemented with the browsing control data, using the first key decrypted in the first decrypting step. The browsing display giving step gives the browsing display of the electronic book data based on the decrypted browsing control data.

According to a yet further aspect of the invention, there is provided a second program for use with a computer which controls a first information processing apparatus for receiving delivery of electronic book data from a second information processing apparatus over a network, the second program causing the computer to execute the controlling steps of: giving a browsing display of the electronic book data; receiving firstly the electronic book data supplemented with browsing control data for controlling the browsing display and encrypted using a first key; receiving secondly the first key encrypted using a second key; decrypting firstly the first key using the second key; and decrypting secondly the encrypted electronic book data supplemented with the browsing control data, using the first key decrypted in the first decrypting step. The browsing display giving step gives the browsing display of the electronic book data based on the decrypted browsing control data.

According to another aspect of the invention, there is provided an information processing system including a first and a second information processing apparatus. The first information apparatus includes: a browsing display control data supplementing element for supplementing the electronic book data with browsing display control data for controlling a browsing display of the electronic book data on the second information processing apparatus; a first encrypting element for encrypting the electronic book data supplemented with the browsing display control data, using a first key set uniquely for the electronic book data; a second encrypting element for encrypting the first key using a second key set uniquely for the second information processing apparatus; and a delivering element for delivering to the second information processing apparatus the electronic book data supplemented with the browsing display control data and encrypted using the first key, together with the first key encrypted using the second key. The second information processing apparatus includes: a browsing display giving element for giving the browsing display of the electronic book data; a first receiving element for receiving the electronic book data supplemented with the browsing control data for controlling the browsing display and encrypted using the first key; a second receiving element for receiving the first key encrypted using the second key; a first decrypting element for decrypting the first key using the second key; and a second decrypting element for decrypting the encrypted electronic book data supplemented with the browsing control data, using the first key decrypted by the first decrypting element. The browsing display giving element gives the browsing display of the electronic book data based on the decrypted browsing control data.

According to a further aspect of the invention, there is provided an information processing method for use with an information processing system including a first and a second information processing apparatus. The information processing method in control of the first information apparatus includes the steps of: supplementing the electronic book data with browsing display control data for controlling a browsing display of the electronic book data on the second information processing apparatus; encrypting firstly the electronic book data supplemented with the browsing display control data, using a first key set uniquely for the electronic book data; encrypting secondly the first key using a second key set uniquely for the second information processing apparatus; and delivering to the second information processing apparatus the electronic book data supplemented with the browsing display control data and encrypted using the first key, together with the first key encrypted using the second key. The information processing method in control of the second information processing apparatus includes the steps of: giving the browsing display of the electronic book data; receiving firstly the electronic book data supplemented with the browsing control data for controlling the browsing display and encrypted using the first key; receiving secondly the first key encrypted using the second key; decrypting firstly the first key using the second key; and decrypting secondly the encrypted electronic book data supplemented with the browsing control data, using the first key decrypted in the first decrypting step. The browsing display giving step gives the browsing display of the electronic book data based on the decrypted browsing control data.

According to an even further aspect of the invention, there is provided a third program for use with a computer which controls an information processing system including a first and a second information processing apparatus. The program causes the computer in control of the first information apparatus to execute the controlling steps of: supplementing the electronic book data with browsing display control data for controlling a browsing display of the electronic book data on the second information processing apparatus; encrypting firstly the electronic book data supplemented with the browsing display control data, using a first key set uniquely for the electronic book data; encrypting secondly the first key using a second key set uniquely for the second information processing apparatus; and delivering to the second information processing apparatus the electronic book data supplemented with the browsing display control data and encrypted using the first key, together with the first key encrypted using the second key. The program causes the computer in control of the second information processing apparatus to execute the controlling steps of: giving the browsing display of the electronic book data; receiving firstly the electronic book data supplemented with the browsing control data for controlling the browsing display and encrypted using the first key; receiving secondly the first key encrypted using the second key; decrypting firstly the first key using the second key; and decrypting secondly the encrypted electronic book data supplemented with the browsing control data, using the first key decrypted in the first decrypting step. The browsing display giving step gives the browsing display of the electronic book data based on the decrypted browsing control data.

Where the first information processing apparatus, the first information processing method, and the first program of this invention are in use, electronic book data are first supplemented with browsing display control data for controlling a browsing display of the electronic book data on a second information processing apparatus. The electronic book data supplemented with the browsing display control data are encrypted using a first key set uniquely for the electronic book data. The first key is encrypted using a second key set uniquely for the second information processing apparatus. The electronic book data supplemented with the browsing display control data and encrypted using the first key are delivered to the second information processing apparatus together with the first key encrypted using the second key.

Where the second information processing apparatus, the second information processing method, and the second program of this invention are in use, a browsing display of electronic book data is first given. The electronic book data supplemented with browsing control data for controlling the browsing display and encrypted using a first key are received. The first key encrypted using a second key is received. The first key is decrypted using the second key. The encrypted electronic book data supplemented with the browsing control data are decrypted using the decrypted first key. The browsing display of the electronic book data is then given based on the decrypted browsing control data.

Where the information processing system, the information processing method for use with the system, and the third program according to this invention are in use, a first information processing apparatus of the system supplements electronic book data with browsing display control data for controlling a browsing display of the electronic book data on a second information processing apparatus of the system. The electronic book data supplemented with the browsing display control data are encrypted using a first key set uniquely for the electronic book data. The first key is encrypted using a second key set uniquely for the second information processing apparatus. The electronic book data supplemented with the browsing display control data and encrypted using the first key are delivered to the second information processing apparatus together with the first key encrypted using the second key. The browsing display of the electronic book data is given on the second information processing apparatus. The electronic book data supplemented with the browsing control data for controlling the browsing display and encrypted using the first key are received. The first key encrypted using the second key is received. The first key is decrypted using the second key. The encrypted electronic book data supplemented with the browsing control data are decrypted using the decrypted first key. The browsing display of the electronic book data is then given based on the decrypted browsing control data.

### BRIEF DESCRIPTION OF DRAWINGS

Fig. 1 is a schematic view showing a typical configuration of an electronic book selling system to which this invention is applied;
Fig. 2 is a block diagram of a control center included in Fig. 1;
Fig. 3 is an explanatory view of customer data;
Fig. 4 is a block diagram of a bookstore's server included in Fig. 1;
Fig. 5 is a block diagram of an author's terminal included in Fig. 1;
Fig. 6 is a block diagram of a publishing company's server included in Fig. 1;
Fig. 7 is a block diagram of a user's terminal included in Fig. 1;
Fig. 8 is a flowchart of steps constituting an electronic bookbinding process;
Fig. 9 is an explanatory view of electronic book data;
Fig. 10 is a flowchart of steps constituting an electronic book data transfer process;
Fig. 11 is a flowchart of steps constituting an electronic book browsing and purchasing process;
Fig. 12 is an explanatory view of a typical electronic book display;
Fig. 13 is an explanatory view of another typical electronic book display;
Fig. 14 is a flowchart of steps constituting a paper book purchasing process;
Fig. 15 is a flowchart of steps constituting a reading data accumulating process;
Fig. 16 is a flowchart of steps constituting a reviewer evaluation process;
Fig. 17 is an explanatory view showing how books are evaluated by readers; and
Fig. 18 is an explanatory view indicating how reviewers are evaluated.

### BEST MODE FOR CARRYING OUT THE INVENTION

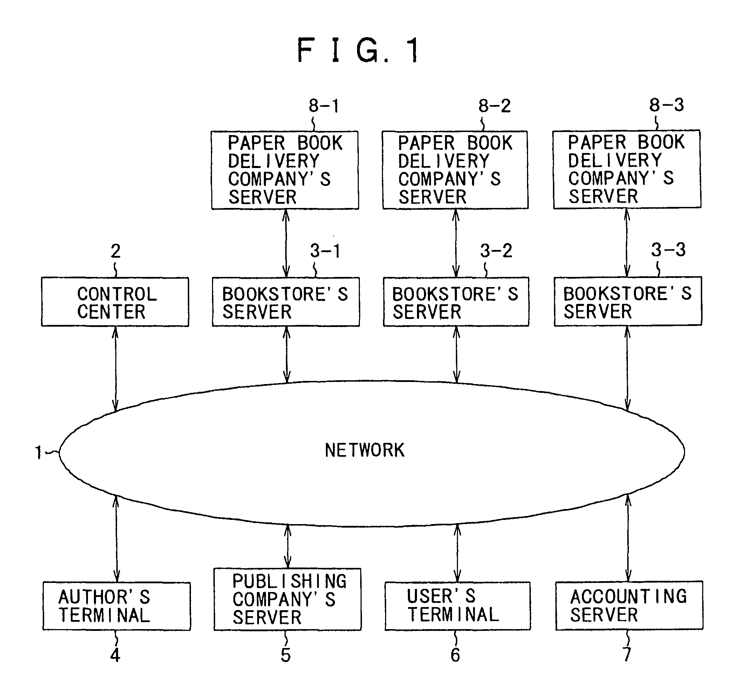

Fig. 1 shows a typical configuration of an electronic book selling system according to the invention. A control center 2 in Fig. 1 is a computer managed by an electronic book intermediary business connecting with a network 1 such as the Internet in order to collect electronic books from a publishing company's server 5 and offer the collected electronic books to bookstores' servers 3-1 through 3-3. On receiving a paper book purchase request from a user's terminal 6 over the network 1, the control center 2 places a book delivery order with any one of paper book delivery companies' servers 8-1 through 8-3 by way of one of bookstores' servers 3-1 through 3-3 which has the applicable book in stock. Furthermore, the control center 2 supplements document data sent from an author's terminal 4 with browsing data and encrypts the whole data using a content key to generate an electronic book for sale. The browsing data will be discussed later in more detail. It should be noted that the setup in Fig. 1 includes only one user's terminal 6 for purpose of simplification and illustration; in practice, a plurality of users' terminals are connected to the network 1.

The bookstores' servers 3-1 through 3-3 are computers managed by bookstore operators selling electronic or paper books to users. Upon receipt of an electronic book purchase request from the user's terminal 6 over the network 1, the applicable bookstore's server allows the book of interest to be downloaded while causing an accounting server 7 to bill the user for the price of the electronic book purchased. In the description that follows, the bookstores' servers 3-1 through 3-3 will be generically referred to as the bookstore's server 3 if there is no specific need for distinction therebetween. Other devices that are similarly configured will also be referred to in like manner. Although the setup in Fig. 1 is shown comprising three bookstores' servers, any number of bookstores' servers may be configured.

The author's terminal 4 is a computer used by an author of electronic books. Connected with the network 1, the author's terminal 4 is used by the author to apply for contribution of the author's document data to a publishing company's server 5 managed by the publishing company under contract with the author. At the time of the application for document data contribution, the author's terminal 4 transfers the document data to the control center 2.

The publishing company's server 5 is a computer managed by an electronic or paper book publishing company. When the author's terminal 4 applies for document data contribution to the publishing company over the network 1, the company's server 5 arranges for the document data in question to be transferred over the network 1 to the control center 2 where the data will be made into an electronic book for sale (in what is called a bookbinding process, to be discussed later). At the time of the document data contribution, the publishing company's server 5 causes the accounting server 7 to make payment as copyright money for the document data.

The user's terminal 6 is a computer employed by the user (i.e., reader) who may purchase electronic or paper books. The user's terminal 6 provides a display of a suitable format allowing the user to browse through candidate electronic books prior to purchase or to read purchased electronic books.

The accounting server 7 is a computer managed by financial institutions under contract with the participating parties running the control center 2, bookstore's server 3, author's terminal 4, publishing company's server 5, and user's terminal 6. As such, the accounting server 7 handles accounting processes between the servers and terminals involved.

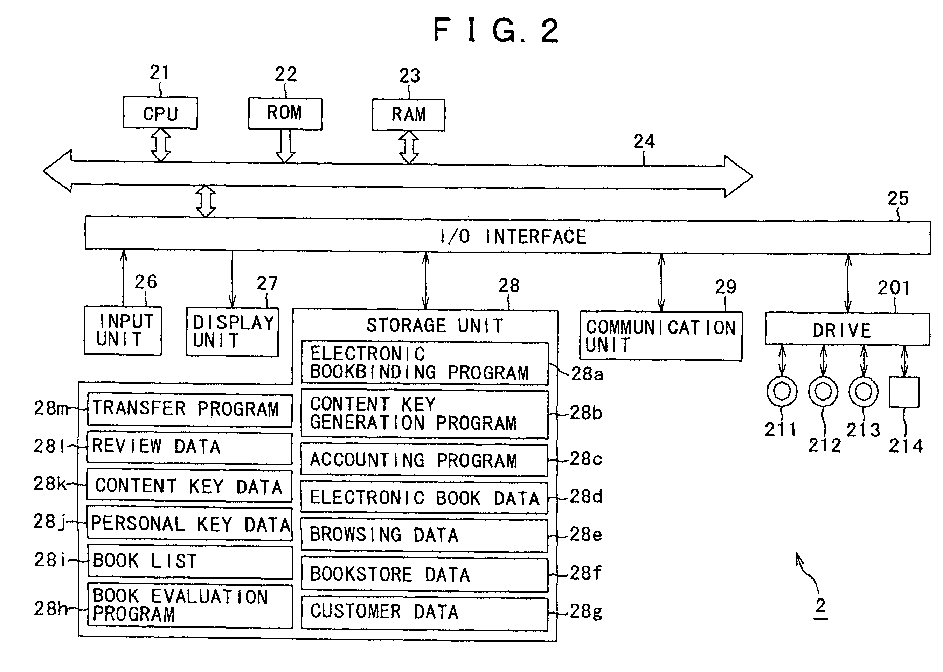

How the control center 2 is structured will now be described with reference to Fig. 2. A CPU (central processing unit) 21 actually executes application programs (to be described later) while running an operating system (OS). A ROM (read-only memory) 22 stores basically fixed data as part of the programs and operation parameters used by the CPU 21. A RAM (random-access memory) 23 accommodates programs being executed by the CPU 21 and parameters varied as needed during the program execution. These components are interconnected by a host bus 24 made of a CPU bus or a memory bus. The CPU 21 connects through an I/O interface 25 to a drive 201 that holds a magnetic disc 211, an optical disc 212, a magneto-optical disc 213, or a semiconductor memory 214. The CPU 21 writes and reads programs and/or data to and from any of these storage media in the drive 201. The programs and/or data retrieved by the CPU 21 from the storage medium are developed in the RAM 23 for execution.

The host bus 24 is connected through a bridge (not shown) to the I/O interface 25 constituted illustratively by a PCI (Peripheral Component Interconnect/Interface) bus.

An input unit 26 is composed of a keyboard and/or a mouse and operated by the user inputting orders to the CPU 21 and pointing to or selecting particular indications on a display screen of a display unit 27. The display unit 27 is typically formed by a CRT (cathode ray tube) or an LCD (liquid crystal display) that shows diverse kinds of information in text or image form.

A storage unit 28 is typically made of a hard disc drive (HDD) or a flexible disc drive (FDD) each driving its disc unit so as to read or write programs and data thereto or therefrom upon execution by the CPU 21 (programs are typically installed in the storage unit 28 before being retrieved for execution). The storage unit 28 accommodates an electronic bookbinding program 28a, a content key generation program 28b, an accounting program 28c, electronic book data 28d, browsing data 28e, bookstore data 28f, customer data 28g, a book evaluation program 28h, a book list 28i, personal key data 28j, content key data 28k, review data 28l, and a transfer program 28m.

In operation, the electronic bookbinding program 28a supplements document data sent from the author's terminal 4 with browsing data 28e, and encrypts the whole data using a content key to generate electronic book data 28d. The electronic bookbinding program 28a then enters the generated electronic book data 28d into the book list 28i it manages.

The content key generation program 28b generates a content key unique to each group of document data and registers the generated key as content key data 28k. More specifically, the content key generation program 28b computes a suitable function using as parameters the total number of characters in the document data and title text data about the document data. The text data derived from the computation are used as a content key.

The accounting program 28c causes the accounting server 7 to carry out accounting processes in association with the control center 2.

The electronic book data 28d, described in XML (Extended Markup Language), are prepared by supplementing document data with the browsing data 28e and encrypting the whole data using a content key. The electronic book data 28d may be described in a language other than XML, such as HTML (Hyper-Text Markup Language).

The browsing data 28e are data with conditions written therein for allowing the user to browse through desired electronic book data 28d under certain restrictions before the purchase. The conditions include a browsable page count, a one-shot browsing time, and a total browsing time. The browsing data 28e will be discussed later in more detail.

The bookstore data 28f are a collection of IDs identifying the bookstores' servers 3 that can be accessed over the network 1. Illustratively, the bookstore data 28f are searched for the bookstore's server 3 which has a particular paper book in stock and which is under contract with the user employing the user's terminal 6 to request the purchase of that book.

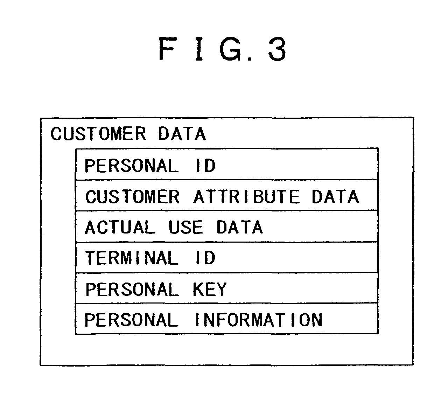

The customer data 28g are personal data about each user registered beforehand with the control center 2 over the network 1, as shown in Fig. 3. The data include a personal ID, customer attribute data, actual use data, a terminal ID, a personal key, and personal information about each user. The personal ID uniquely identifies each user. The customer attribute data indicate each user's attributes, e.g., whether the user has any subscription or has bought any books (electronic or paper) in the past. The actual use data are accumulated data about what kinds of books each user has bought so far. The terminal ID identifies the user's terminal 6 employed by each user. With this system, the selling of electronic books and the placing of orders for paper books over the network 1 are based on the assumption that each user utilizes a user's terminal 6 registered in advance. Any processing of the system can be made only if there is a match between a personal ID and a terminal ID. The personal key is a decryption key established with respect to each personal ID and is used to encrypt a content key. The personal information includes the address, telephone number, credit card number and other relevant data about each customer, and is used illustratively when paper books are arranged to be delivered to the customer.

The book evaluation program 28h works as follows: each user (i.e., reader) contributes reading data indicating in what degree he or she has appreciated each electronic book having been read. The reading data thus contributed are used as a basis on which the program 28h computes objective evaluations of the books by each reader. The program 28h then compares the readers' evaluations with review data 28l, i.e., recorded grades of book reviews by a plurality of reviewers, to see how close each reviewer's review is to the readers' evaluation regarding each book. The comparison by the program 28h reveals each reviewer's evaluating ability. reviewer evaluation process performed by the book evaluation program 28h will be discussed later in more detail.

The transfer program 28m transfers the designated electronic book data 28d to the user's terminal 6 on request from the bookstore's server 3.

The communication unit 29 is typically constituted by a modem. Under control of the CPU 21, the communication unit 29 connects to the network 1 through a telephone line or the like for exchanging data with other computers.

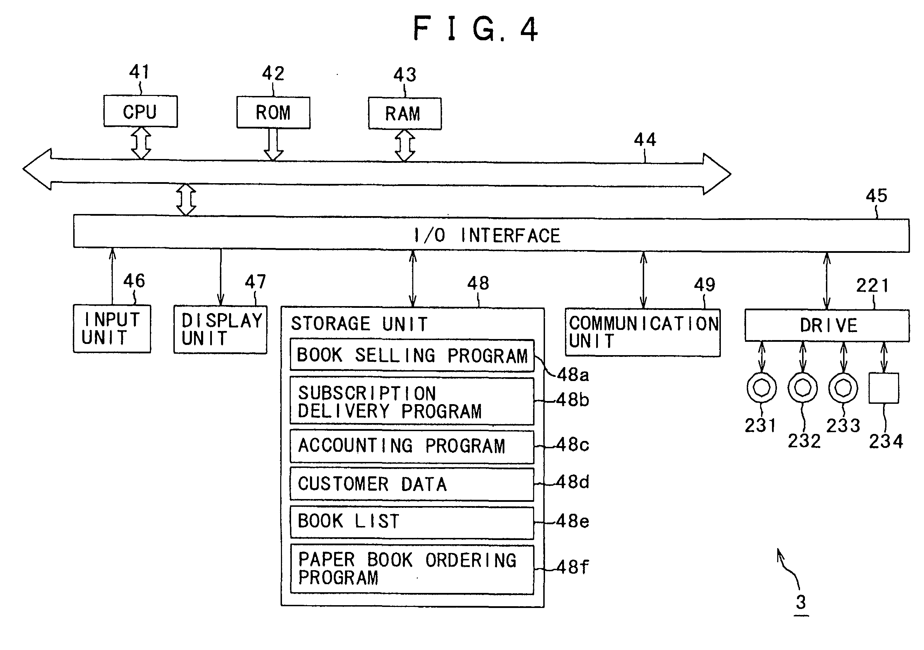

The bookstore's server 3 will now be described with reference to Fig. 4. The bookstore's server 3 is a computer which is basically the same in structure as the control center 2 discussed above by referring to Fig. 2. That is, the bookstore's server 3 includes a CPU 41, a ROM 42, a RAM 43, a host bus 44, an I/O interface 45, an input unit 46, a display unit 47, a storage unit 48, a communication unit 49, a drive 221, a magnetic disc 231, an optical disc 232, a magneto-optical disc 233, and a semiconductor memory 234 which are structurally and functionally similar to the CPU 21, ROM 22, RAM 23, host bus 24, I/O interface 25, input unit 26, display unit 27, storage unit 28, communication unit 29, drive 201, magnetic disc 211, optical disc 212, magneto-optical disc 213, and semiconductor memory 214, respectively, in the control center 2 of Fig. 2. What makes the bookstore's server 3 different from the control center 2 are the kinds of preinstalled programs and preset data in the storage unit 48.

Thus no description will be made of the CPU 41, ROM 42, RAM 43, host bus 44, I/O interface 45, input unit 46, display unit 47, storage unit 48, communication unit 49, drive 221, magnetic disc 231, optical disc 232, magneto-optical disc 233, and semiconductor memory 234 constituting the bookstore's server 3. What follows is a description of the preinstalled programs and preset data in the storage unit 48.

A book selling program 48a is executed when the user's terminal 6 requests the purchase of an electronic or paper book over the network 1. Given an electronic book purchase request, the book selling program 48a performs a selling process by searching the book list for the designated electronic book and sending the retrieved book data to the requesting user's terminal 6. At this point, the book selling program 48a starts up an accounting program 48c which in turn causes the accounting server 7 over the network 1 to perform a accounting process with regard to the electronic book having been sold.

A subscription delivery program 48b delivers an electronic publication periodically to the user's terminal 6 employed by the user subscribing to the publication in question.

The accounting program is executed when the book selling program 48a performs an electronic book selling process. During the process, the accounting program in association with the accounting server 7 makes a payment for the electronic book sold over the network 1.

Customer data 48d are those items of data managed by the control center 2 which concern the customers (users, i.e., readers) under contract with the bookstore operator managing the bookstore's server 3. The format of the customer data 48d is the same as that shown in Fig. 3.

A book list 48e is a listing of information indicating the electronic and paper books on sale at the bookstore managing the server 3. The book list 48e is updated by the control center 2 periodically and/or whenever a new publication is entered. When the book selling program 48a performs a book selling process, the book list 48e is retrieved and transmitted to the user (customer). The user at the user's terminal 6 can look for a book to buy based on the transmitted information.

A paper book ordering program 48f is executed on request from the user's terminal 6 placing the purchase order for a paper book. Given the request, the paper book ordering program 48f causes the control center 2 to send the paper book designated by the user's terminal 6 along with the personal information included in the customer data 48d to the paper book delivery company's server 8 in order to make the necessary arrangements for the delivery of the book.

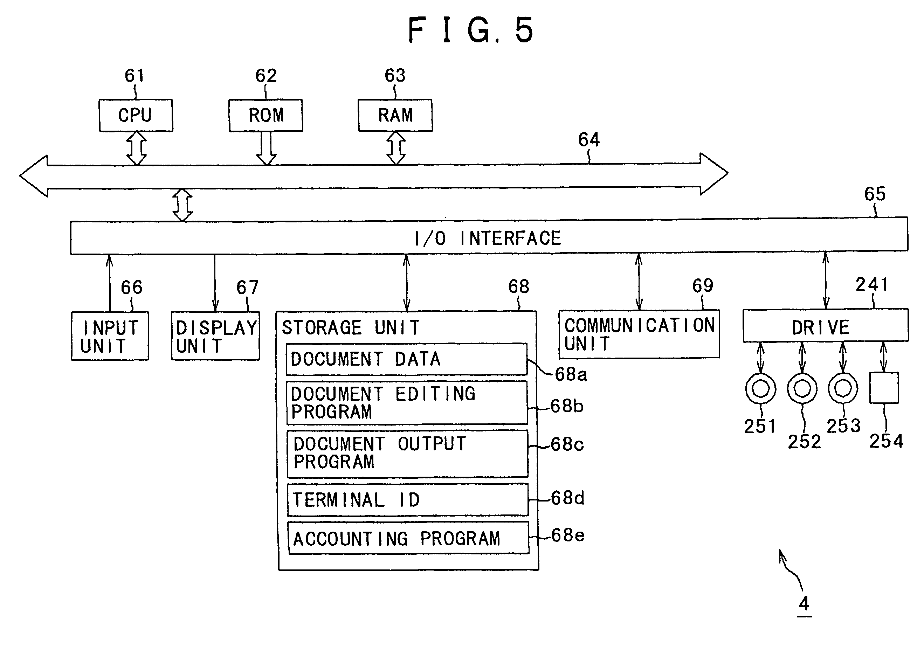

How the author's terminal 4 is structured will now be described with reference to Fig. 5.

The author's terminal 4 is a computer which is basically the same in structure as the control center 2 discussed above by referring to Fig. 2 or as the bookstore's server 3 described with reference to Fig. 4. That is, the author's terminal 4 includes a CPU 61, a ROM 62, a RAM 63, a host bus 64, an I/O interface 65, an input unit 66, a display unit 67, a storage unit 68, a communication unit 69, a drive 241, a magnetic disc 251, an optical disc 252, a magneto-optical disc 253, and a semiconductor memory 254 which are structurally and functionally similar to the CPU 21, ROM 22, RAM 23, host bus 24, I/O interface 25, input unit 26, display unit 27, storage unit 28, communication unit 29, drive 201, magnetic disc 211, optical disc 212, magneto-optical disc 213, and semiconductor memory 214, respectively, in the control center 2 of Fig. 2. What makes the author's terminal 4 different from the control center 2 are the kinds of preinstalled programs and preset data in the storage unit 68.

Thus no description will be made of the CPU 61, ROM 62, RAM 63, host bus 64, I/O interface 65, input unit 66, display unit 67, storage unit 68, communication unit 69, drive 241, magnetic disc 251, optical disc 252, magneto-optical disc 253, and semiconductor memory 254 constituting the author's terminal 4. What follows is a description of the preinstalled programs and preset data in the storage unit 68.

Document data 68a are text data drafted by the author using a document editing program 68b or the like. As such, the document data 68a constitute the original document of an electronic or paper book. A document output program 68c gains access to the publishing company's server 5 and control center 2 using a terminal ID 68d identifying the author's terminal 4, and transmits the document data 68a to the connected servers. At this point, the document output program 68c causes an accounting program 68e to perform an accounting process dealing with a fee for the document data.

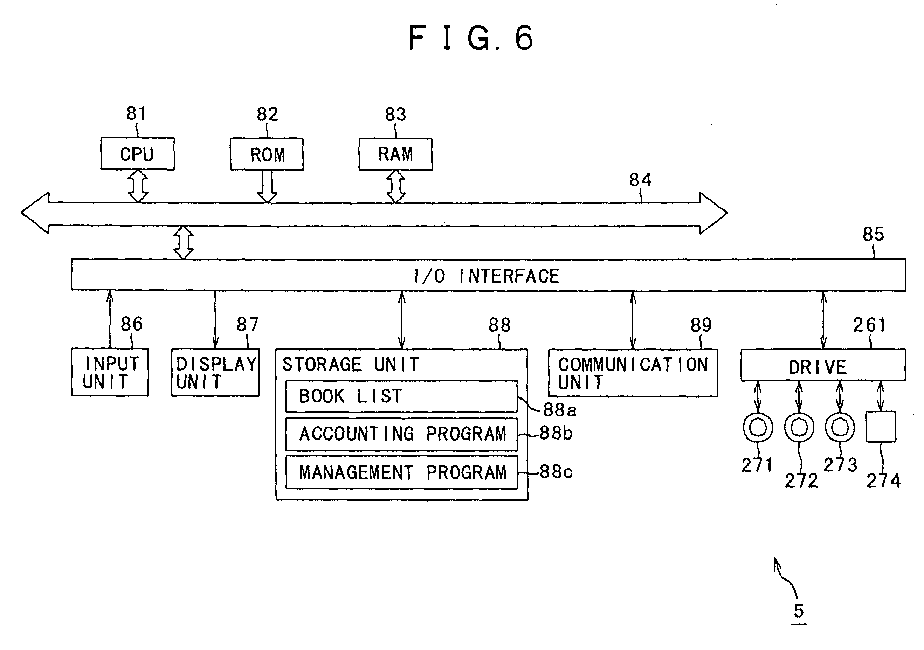

How the publishing company's server 5 is structured will now be described with reference to Fig. 6.

The publishing company's server 5 is a computer which is basically the same in structure as the control center 2 discussed above by referring to Fig. 2, as the bookstore's server 3 described with reference to Fig. 4, or as the author's terminal 4 explained in reference to Fig. 5. That is, the publishing company's server 5 includes a CPU 81, a ROM 82, a RAM 83, a host bus 84, an I/O interface 85, an input unit 86, a display unit 87, a storage unit 88, a communication unit 89, a drive 261, a magnetic disc 271, an optical disc 272, a magneto-optical disc 273, and a semiconductor memory 274 which are structurally and functionally similar to the CPU 21, ROM 22, RAM 23, host bus 24, I/O interface 25, input unit 26, display unit 27, storage unit 28, communication unit 29, drive 201, magnetic disc 211, optical disc 212, magneto-optical disc 213, and semiconductor memory 214, respectively, in the control center 2 of Fig. 2. What makes the publishing company's server 5 different from the control center 2 are the kinds of preinstalled programs and preset data in the storage unit 88.

Thus no description will be made of the CPU 81, ROM 82, RAM 83, host bus 84, I/O interface 85, input unit 86, display unit 87, storage unit 88, communication unit 89, drive 261, magnetic disc 271, optical disc 272, magneto-optical disc 273, and semiconductor memory 274 constituting the publishing company's server 5. What follows is a description of the preinstalled programs and preset data in the storage unit 88.

A book list 88a is a listing of data constituting all electronic and paper books published by the publishing company that manages the server 5. When document data are sent from the author's terminal 4, the data are entered into the book list 88a which is updated then and there. Upon receipt of the document data, an accounting program 88b causes the accounting server 7 to carry out a corresponding accounting process. A management program 88c manages the operation of the publishing company's server 5. Where there exist document data contributed from the author's terminal 4, the management program 88c orders transfer of the data to the control center 2 and causes the accounting program 88b to perform a suitable accounting process to deal with the contribution of the document.

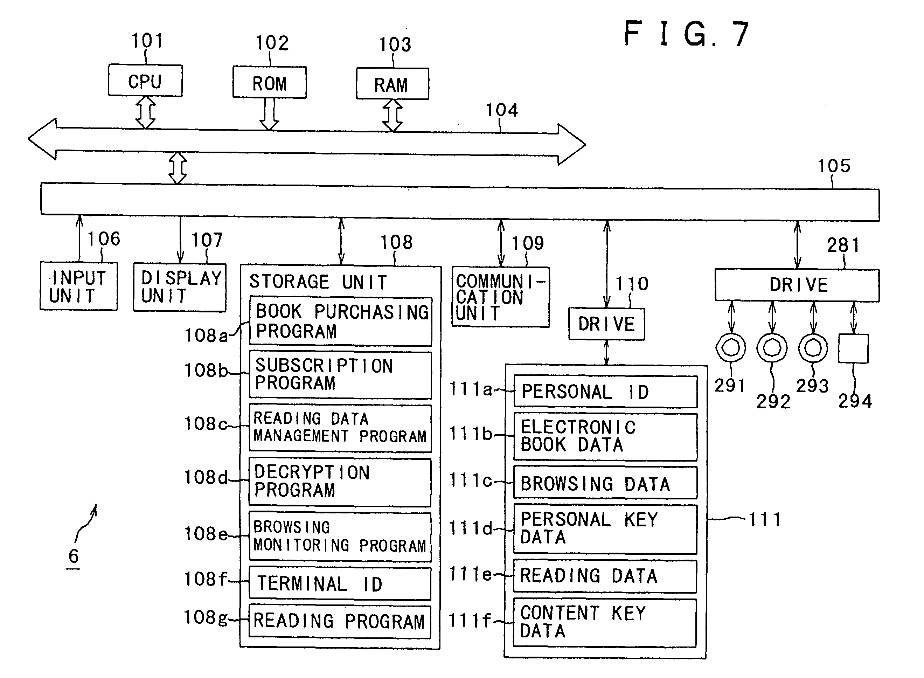

How the user's terminal 6 is structured will now be described with reference to Fig. 7.

The user's terminal 6 is a computer which is basically the same in structure as the control center 2 discussed above by referring to Fig. 2, as the bookstore's server 3 described with reference to Fig. 4, as the author's terminal 4 explained in reference to Fig. 5, or as the publishing company's server 5 discussed by referring to Fig. 6. That is, the user's terminal 6 includes a CPU 101, a ROM 102, a RAM 103, a host bus 104, an I/O interface 105, an input unit 106, a display unit 107, a storage unit 108, a communication unit 109, a drive 281, a magnetic disc 291, an optical disc 292, a magneto-optical disc 293, and a semiconductor memory 294 which are structurally and functionally similar to the CPU 21, ROM 22, RAM 23, host bus 24, I/O interface 25, input unit 26, display unit 27, storage unit 28, communication unit 29, drive 201, magnetic disc 211, optical disc 212, magneto-optical disc 213, and semiconductor memory 214, respectively, in the control center 2 of Fig. 2. The difference of the user's terminal 6 from the control center 2 lies in preinstalled programs and preset data in the storage unit 108, as well as in a semiconductor memory 111 loaded in a drive 110.

Thus no description will be made of the CPU 101, ROM 102, RAM 103, host bus 104, I/O interface 105, input unit 106, display unit 107, storage unit 108, communication unit 109, drive 281, magnetic disc 291, optical disc 292, magneto-optical disc 293, and semiconductor memory 294 constituting the user's terminal 6. What follows is a description of the preinstalled programs and preset data in the storage unit 108, the drive 110, and the semiconductor memory 111.

A book purchasing program 108a is executed when the user requests the purchase (including browsing) of a book. In operation, the book purchasing program 108a carries out an electronic or paper book purchasing process (including transfer of electronic book data for browsing) on the control center 2 or bookstore's server 3 over the network 1. When an electronic book is purchased or electronic book data are downloaded for browsing purposes, the data are written to the semiconductor memory 111 in the drive 110 as electronic book data 111b. A subscription program 108b performs an electronic book purchasing process periodically.

A reading data management program 108c is executed when the user carries out a reading program 108g to retrieve the downloaded electronic book data 111b from the semiconductor memory 111 in order to read the book. During the reading, the reading data management program 108c collects reading data 111e made up of a turned-page count, a book reading count, a book lending count, and a multiple-turn page count about the book. The reading data thus collected are written to the semiconductor memory 111.

A decryption program 108d is executed when the reading program 108g causes electronic book data 111b to be displayed. For such a book data display to take place, the decryption program 108d decrypts the content key held temporarily in content key data 111f and encrypted using a personal key. The decryption program 108d further decrypts the encrypted electronic book data using the decrypted content key.

A browsing monitoring program 108e is started up when the electronic book data 111b yet to be purchased definitively are browsed by use of the reading program 108g. Based on browsing data, the browsing monitoring program 108e sets specific conditions for restricting browsing. If any of the conditions is not met, the browsing monitoring program 108e disables the current browsing of electronic book data by the reading program 108g. More specifically, a browsable page count, a one-shot browsing time, and a total browsing time are established as the browsing conditions that are being monitored. The moment any one of these conditions is not met, the browsing is disabled.

A terminal ID 108f uniquely identifying each user's terminal 6 is used for authentication when the terminal 6 downloads electronic book data 111b from the control center 2. The reading program 108g retrieves the stored electronic book data 111b from the semiconductor memory 111 for display on the display unit 107.

The drive 110 allows the semiconductor memory 111 to be loaded and unloaded thereto and therefrom. Under control of the CPU 101, the drive 110 writes or reads programs and data to or from the loaded semiconductor memory 111. The semiconductor memory 111 is a portable, small-sized storage medium such as Memory Stick (trademark) manufactured by Sony Corporation, this applicant.

A personal ID 111a uniquely identifying each user is stored in each semiconductor memory 111, and is used in conjunction with the terminal ID 108f when the book purchasing program 108a purchases an electronic book. Browsing data 111c are data that stipulate browsing conditions and are recorded by the browsing monitoring program 108e.

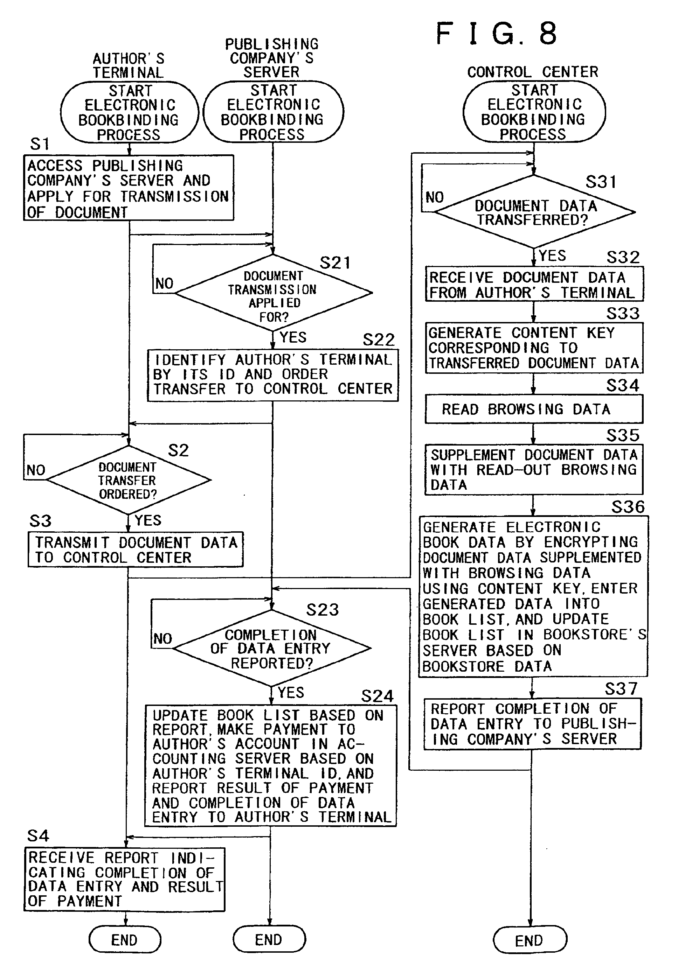

Described below with reference to the flowchart of Fig. 8 is how document data are transferred from the author's terminal 4 to the control center 2 (i.e., document data are contributed) in an electronic bookbinding process (i.e., the document data are converted to marketable electronic book data).

In step S1, the document output program 68c accesses the publishing company's server 5 through the communication unit 69 over the network 1. After authentication using the terminal ID 68d, the document output program 68c applies for transmission of document data.

In step S21, the management program 88c of the publishing company's server 5 checks through the communication unit 89 to see if the author's terminal 4 has applied for document data transmission. The check is repeated until the application for the transmission is detected. When the document data transmission is applied for, step S22 is reached.

In step S22, the management program 88c receives through the communication unit 89 the terminal ID 68d of the author's terminal 4 along with the document transmission application from the terminal 4. The management program 88c recognizes the author's terminal 4 (to find out the author's identity) based on the terminal ID 68d and orders the author's document data 68a to be transferred to the control center 2.

In step S2, the document output program 68c checks to see if the publishing company's server 5 has ordered the document data to be transferred to the control center 2. The check is repeated until the order is detected. In this example, the order is given in step S22 for the transfer of the document data 68a, so that step S2 is followed by step S3 in which the document output program 68c reads the document data 68a and transfers the data to the control center 2 through the communication unit 89 over the network 1.

In step S31, the electronic bookbinding program 28a of the control center 2 checks to see if document data have been transferred. The check is repeated until the transferred document data are detected. Illustratively, when the document data are transferred in step S3, the presence of the data is detected in step S31 which is then followed by step S32.

In step S32, the electronic bookbinding program 28a receives the document data from the author's terminal 4 through the communication unit 29 and stores the received data into the storage unit 28. In step S33, the electronic bookbinding program 28a causes the content key generation program 28b to generate a content key corresponding to the received document data and enters the generated content key into the content key data 28k. In step S34, the electronic bookbinding program 28a reads browsing data 28e applicable to the received document data.

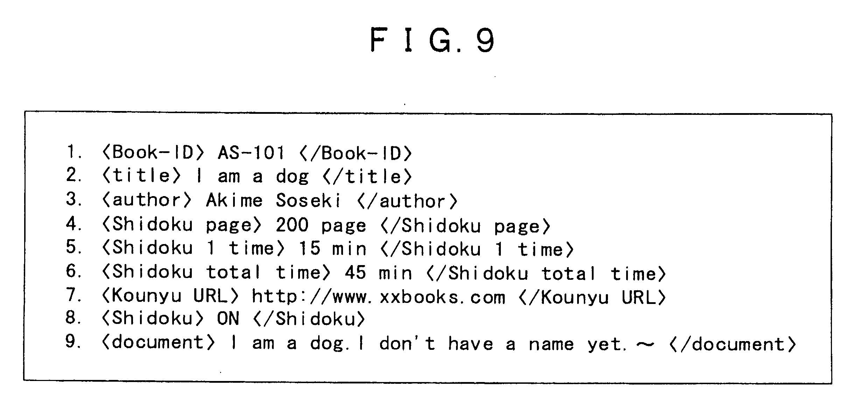

In step S35, the electronic bookbinding program 28a supplements the document data with the retrieved browsing data 28e and converts the whole data to electronic book data in XML format (i.e., the browsing data 28e are added to a header of the electronic book in XML before conversion into electronic book data). More specifically, the conversion process generates XML-format data such as those shown in Fig. 9. In the example of Fig. 9, line 1 describes "<Book-ID> AS-101 </Book-ID>"; the value "AS-101" placed between "<Book-ID>" and "</Book-ID>" represents the ID identifying this electronic book. Line 2 describes "<Title> I am a dog </Title>"; the expression "I am a dog" between "<Title>" and "</Title>" denotes the title of this electronic book. Line 3 describes "<author> Akime Soseki </author>"; the wording "Akime Soseki" between "<author>" and "</author>" indicates the author of this electronic book. Line 4 describes "<Shidokupage> 200 page </Shidokupage>"; the indication "200 page" between "<Shidokupage>" and "</Shidokupage>" denotes a browsable page count of 200 pages for this electronic book. Line 5 describes "<Shidoku 1 time> 15 min </Shidoku 1 time>"; the indication "15 min" between "<Shidoku 1 time> and "</Shidoku 1 time>" represents a one-shot browsing time of 15 minutes allowed for a single browsing session of this electronic book. Line 6 describes "<Shidoku total time> 45 min </Shidoku total time>"; the indication "45 min" between "<Shidoku total time>" and "</Shidoku total time>" denotes a total browsing time of 45 minutes allowed for this electronic book. Line 7 describes "<kounyu URL> http://www.xxbooks.com </kounyu URL>"; the expression "http://www.xxbooks.com" between "<kounyu URL>" and "</kounyu URL>" indicates the URL (Universal Resource Locator) of the control center 2 or bookstore's server 3 from which electronic books can be purchased. At the user's terminal 6, as will be described later, the reading program 108g displays on the screen a button that may be pushed by the user wanting to purchase an electronic book. Pushing the button causes the book purchasing program 108a to access the control center 2 using the URL found on line 7. This process will be discussed later in more detail. Line 8 describes "<Shidoku> ON </Shidoku>"; the word "ON" between "<Shidoku>" and </Shidoku>" indicates that browsing has been set, i.e., that this electronic book has yet to be purchased. The setting is canceled by the book purchasing program 108a of the user's terminal 6 when the purchase of the electronic book data 111b is completed. Thus while any book data having undergone the bookbinding process have yet to be purchased, the browsing setting is turned on for the book data in question. Line 9 describes "<Document> I am a dog. I don't have a name yet... </Document>"; what is placed between "<Document>" and "</Document>" constitutes the actual document data. In the above format, lines 4 to 8 make up the browsing data.

Back to step S36 in the flowchart of Fig. 8.

The electronic bookbinding program 28a reads the applicable content key from the content key data 28k, encrypts the document data supplemented with the browsing data 28e using the content key so as to generate the electronic book data 28d, and enters information about the generated electronic book data 28d into the book list 28i. At the same time, the electronic bookbinding program 28a searches the bookstore data 28f for the bookstore at which the electronic book data 28d are to be marketed, and updates the book list 48e of the applicable bookstore's server 3 through the communication unit 29. More specifically, the electronic bookbinding program 28a sends update information about the book list 48e to the bookstore's server 3 through the communication unit 29 over the network 1 together with an updating order. In turn, the bookstore's server 3 updates the book list 48e based on the update information and updating order received through the communication unit 49 over the network 1.

In step S37, the electronic bookbinding program 28a reports to the publishing company's server 5 through the communication unit 29 that the received document data have been converted into an electronic book and entered as such.

In step S23, the management program 88c checks to see if entry of the document data has been completed. The check is repeated until completion of the data entry is verified, i.e., until the completion of the entry is reported from the control center 2. With the data entry reported completed in step S37 and verified in step S23, step S24 is reached.

In step S24, the management program 88c updates the book list 88a based on the report of data entry completion. At the same time, the management program 88c starts up the accounting program 88b causing the accounting server 7 on the network 1 to make payment for the contributed document data in keeping with the terminal ID 68d of the author's terminal 4 that has transmitted the document data. The result of the payment and the completion of the data entry are reported to the author's terminal 4.

In step S4, the author's terminal 4 is notified that the document data have been entered as an electronic book and that the payment has been made for the entered data.

The steps above cause the control center 2 to convert the author's document data into an electronic book for sale over the network 1. Concurrently, an accounting process is performed to make a suitable payment for the contributed document data. Following the accounting process, the author may operate the terminal 4 to start up the accounting program 68e to access the accounting server 7 and verify whether the payment has been made. The electronic book data 28d generated in the electronic bookbinding process above are not limited in format to what is shown in Fig. 9. Alternatively, any other suitable format may be adopted as long as the book data are composed of the document data and browsing data.

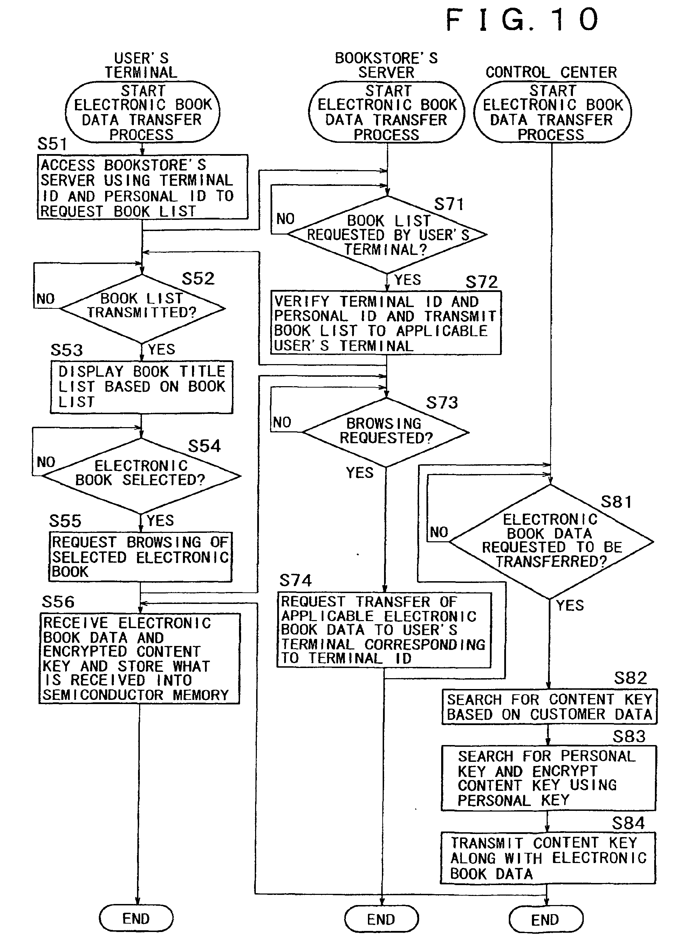

Described below with reference to the flowchart of Fig. 10 is how the user gets an electronic book transferred to the user's terminal 6 for browsing before deciding to purchase the book data from the bookstore's server 3 following the bookbinding process described above.

In step S51, the book purchasing program 108a reads the terminal ID 108f from the storage unit 108 and the personal ID 111a from the semiconductor memory 111 loaded in the drive 110. Using the retrieved IDs, the book purchasing program 108a accesses the bookstore's server 3 to request the book list 48e.

In step S71, the book selling program 48a of the bookstore's server 3 checks to see if a request for the book list 48e is received from the user's terminal 6. The check is repeated until the book list request is detected. Illustratively, when the request made in step S51 for the book list 48 is detected in step S71, step S72 is reached.

In step S72, the book selling program 48a authenticates the user at the terminal 6 by referencing the customer data 48d and based on the terminal ID and personal ID transmitted along with the request for the book list 48e. After the authentication, the book selling program 48a transmits the book list 48e to the applicable user's terminal 6.

In step S52, the book purchasing program 108a checks to see if the book list 48e has been transmitted. Illustratively, when the book list 48e sent in step S72 is judged received in step S52, step S53 is reached. In step S53, the book purchasing program 108a causes the display unit 107 to display electronic book title information based on the book list 48e.

In step S54, the book purchasing program 108a checks to see if any electronic book is selected from the books whose titles are being displayed on the display unit 107. The check is repeated until an electronic book is selected. Illustratively, when the user operates the input unit 106 to select a desired electronic book, step S55 is reached. In step S55, the book purchasing program 108a transmits a request through the communication unit 109 to the bookstore's server 3 for the browsing of the selected electronic book. More particularly, the book purchasing program 108a sends the browsing request together with an ID of the selected electronic book (e.g., electronic book ID described on line 1 in Fig. 9), the terminal ID 108f, and the personal ID 111a.

In step S73, the book selling program 48a of the bookstore's server 3 checks to see if a browsing request is sent from the user's terminal 6. The check is repeated until the request for browsing is received. Illustratively, when the request made in step S55 for the browsing of the selected electronic book is judged received in step S73, step S74 is reached.

In step S74, the book selling program 48a transmits the electronic book ID, terminal ID, and personal ID to the control center 2. The ID transmission is effected to request the control center 2 to transmit the electronic book data identified by the electronic book ID to the requesting user's terminal 6 identified by the terminal ID.

In step S81, the transfer program 28m of the control center 2 checks to see if a request is made by the bookstore's server 3 for the transfer of electronic book data. The check is repeated until the electronic book data transfer request is received. Illustratively, when the request made in step S74 for the transfer of the selected electronic book data is judged received in step S81, step S82 is reached.

In step S82, the transfer program 28m searches the electronic book data 28d for the book data corresponding to the electronic book ID received, and searches the content key data 28k for the content key applicable to the electronic book data 28d in question.

In step S83, the transfer program 28m reads from the personal key data 28j the personal key corresponding to the personal ID 111a, and encrypts the content key using the personal key thus retrieved. In step S84, the transfer program 28m transfers the encrypted content key to the user's terminal 6 together with the electronic book data.

In step S56, the book purchasing program 108a of the user's terminal 6 receives the electronic book data and encrypted content key, and causes the drive 110 to store what is received into the semiconductor memory 111.

The steps described above allow the user at the user's terminal 6 to look up the book list listing the books handled by the bookstore managing the server 3. The user is allowed to obtain desired electronic book data found in the book list as well as the content key encrypted using the personal key for browsing purposes. At this point, the selected electronic book data have yet to be purchased definitively.

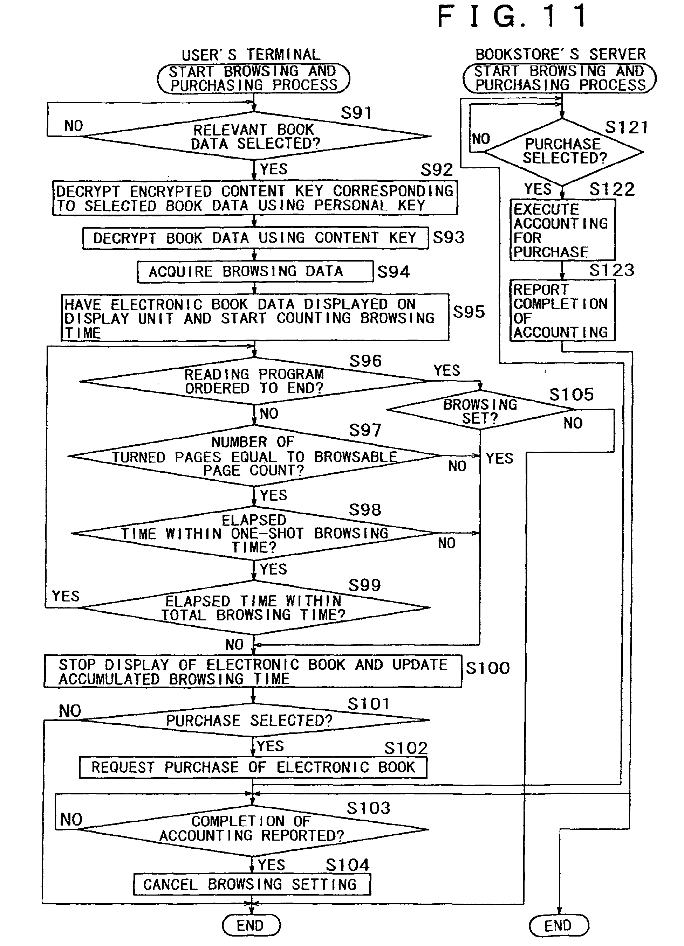

Described below with reference to the flowchart of Fig. 11 is how the user browses through the acquired electronic book on the user's terminal 6 and purchases the browsed book data from the bookstore's server 3.

In step S91, the reading program 108g checks to see if relevant electronic book data are selected. The check is repeated until the electronic book data have been selected. Illustratively, when the electronic book data 111b obtained in the process of Fig. 10 are judged selected in step S91, step S92 is reached.

In step S92, the reading program 108g causes the decryption program 108d to read from the content key data 111f the content key corresponding to the selected electronic book data and to decrypt the content key using personal key data 111d.

In step S93, the reading program 108g causes the decryption program 108d to decrypt the electronic book data using the decrypted content key. In step S94, the browsing monitoring program 108e reads browsing data from the decrypted electronic book data. More specifically, if the electronic book data are described as shown in Fig. 9, the browsing monitoring program 108e read the browsing data from lines 4 to 7 in Fig. 9.

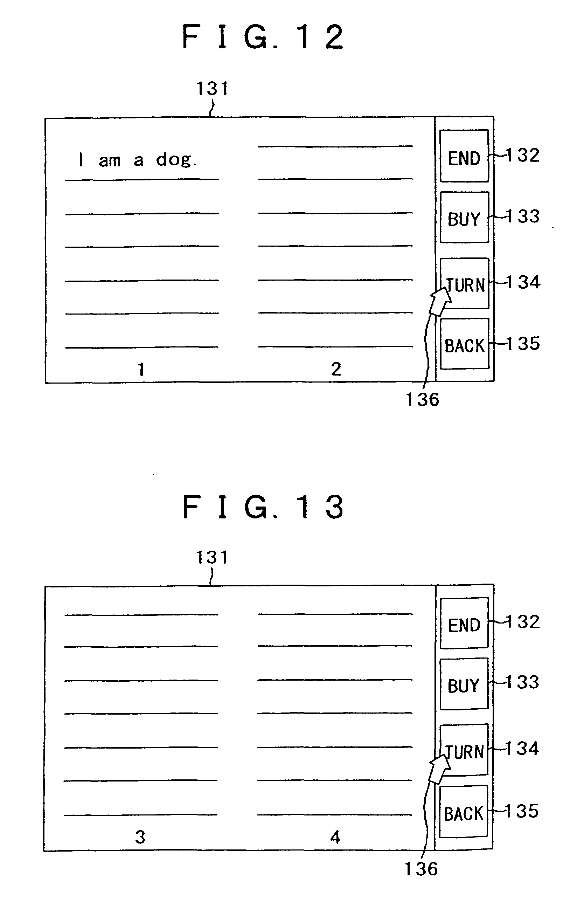

In step S95, the reading program 108g displays the electronic book data on the display unit 107 as illustrated in Fig. 12. At the same time, the browsing monitoring program 108e starts counting the browsing time. More specifically, if the electronic book data are described as shown in Fig. 9, the reading program 108g displays the document data described from line 9 onward in Fig. 9.

Referring to Fig. 12, a typical screen displayed by the reading program 108g on the display unit 107 will now be described. A document display field 131 on the screen shows pages of an actual book. In this example, the document display field 131 indicates the sentences, "I am a dog...," corresponding to the electronic book data appearing on line 9 and subsequent lines in Fig. 9. The left-hand part and right-hand part of Fig. 12 show page 1 and page 2, respectively. At the rightmost position of the document display field 131 are a number of operation buttons: an END button 132 at the top, a BUY button 133, a TURN button 134, and a BACK button 135 at the bottom. By operating the input unit 106, the user may position a pointer 136 onto the END button 132 and click on it to terminate the reading program 108g. The BUY button 133 is clicked on to purchase an electronic or paper book. Illustratively, with an electronic book displayed in the document display field 131 for browsing, the user having decided to buy the book may operate the input unit 106 to click on the BUY button 133. This starts the purchasing process for the electronic book. If an already purchased electronic book is displayed in the document display field 131, the user having decided to buy the paper book version of it may operate the input unit 106 to click on the BUY button 133. This starts the purchasing process for the paper book. The TURN button 134 is operated using the pointer 136 to turn pages. For example, positioning the pointer 136 onto the TURN button 134 in Fig. 12 and clicking on it turns the pages to bring about what is shown in Fig. 13. In Fig. 13, the left-hand part and right-hand part show page 3 and page 4, respectively. The BACK button 135 at the bottom is operated when the pages are desired to be turned back. Illustratively, placing the pointer 136 onto the BACK button 135 in Fig. 13 and clicking on it turns back the pages to bring about the preceding state of Fig. 12. As described, the document display field 131 shows book data in a double-page spread format as if the display constitutes a physical book. The pages are also turned in the same manner as those of paper books.

Back to step S96 in the flowchart of Fig. 11.

The reading program 108g checks to see if its termination has been ordered by the user operating the input unit 106. If the termination is judged not ordered, step S97 is reached.

In step S97, the browsing monitoring program 108e checks to see if the number of turned pages is within the browsable page count set in the browsing data. If the number of turned pages is judged to be within the browsable page count, step S98 is reached.

In step S98, the browsing monitoring program 108e checks to see if the elapsed time in this browsing session is within the predetermined one-shot browsing time. If the elapsed time is judged to be within the established time range, step S99 is reached. In step S99, the browsing monitoring program 108e checks to see if the elapsed time is within the predetermined total browsing time. If the elapsed time is judged to exceed the total browsing time, step S100 is reached.

In step S100, the reading program 108g stops display of the electronic book data. At the same time, the browsing monitoring program 108e computes the accumulated browsing time and updates the browsing data 111c.

In step S101, the book purchasing program 108a checks to see if the purchase of the book is selected. Illustratively, a click on the BUY button 133 in Fig. 12 is interpreted as selection of the purchase. In that case, step S102 is reached.

In step S102, the book purchasing program 108a accesses the bookstore's server 3 to request the purchase of the book. More specifically, the book purchasing program 108a gains access to the bookstore's server 3 using the URL (e.g., the URL on line 7 in Fig. 9) representing the bookstore in question, and submits the personal ID 111a and an ID of the desired book along with a request for the purchase of the book.

In step S121, the book selling program 48a of the bookstore's server 3 checks to see if a request for the purchase of a book is received. The check is repeated until the book purchase request is detected. Illustratively, when the purchase request made in step S102 is detected in step S121, step S122 is reached.

In step S122, the book selling program 48a starts up the accounting program 48c causing the accounting server 7 to carry out an accounting process for dealing with the purchase. More specifically, the book selling program 48a finds out the requesting user's account number by referencing the customer data 48d using the personal ID 111a transmitted in step S102, and reports the account number and the price of the requested book based on the book ID to the accounting program 48c. In turn, the accounting program 48c causes the accounting server 7 to perform the necessary accounting process.

In step S123, with the accounting program 48c having ended its process, the book selling program 48a reports completion of the accounting process to the user's terminal 6 through the communication unit 49.

In step S103, the book purchasing program 108a checks to see if completion of the accounting process is reported. The check is repeated until the report of purchase completion is received. Illustratively, when the accounting process completion report sent in step S123 is judged received in step S103, step S104 is reached.

In step S104, the book purchasing program 108a cancels the browsing setting in the browsing data 111c. More specifically, in the case of the browsing data 111c shown in Fig. 9, the book purchasing program 108a sets "OFF" on line 8 for browsing setting cancellation. In other words, the book selling program 48a first sends the report in step S123 together with a cancel key for turning off the browsing setting. Using the cancel key, the book purchasing program 108a turns off the browsing setting in step S104.

If in step S96 the END button 132 of Fig. 12 is clicked on, step S105 is reached. In step S105, the browsing monitoring program 108e checks to see if the browsing setting is turned on. In the case of the browsing data in Fig. 9, the word "ON" on line 8 is interpreted as activation of the browsing setting. Then steps S97 through S99 are skipped and step S100 is reached. If the browsing setting is turned off in step S104, the process is terminated.

If in step S97 the number of turned pages is judged to exceed the predetermined page count, step S100 is reached. More specifically, in the case of the browsing data in Fig. 9, the description "200 page" on line 4 means that turning 201 pages or more is not tolerated. An excess of the allowable page count, when detected by the browsing monitoring program 108e, causes step S100 to be reached.

If in step S98 the elapsed time is judged to exceed the predetermined one-shot browsing time, step S100 is reached. More specifically, in the case of the browsing data in Fig. 9, the description "15 min" on line 5 means that a browsing session exceeding 15 minutes is detected by the browsing monitoring program 108e which then passes control to step S100.

If in step S99 the elapsed time is judged to be within the predetermined total browsing time, step S96 is reached again. More specifically, in the case of the browsing data in Fig. 9, the time "45 min" is set on line 6 as the total browsing time allowed. As long as the browsing monitoring program 108e judges the elapsed time to fall within the total browsing time of 45 minutes, control is kept returned to step S96.

As described above, with the reading program 108g in operation, the browsing monitoring program 108e repeats steps S96 through S99 as long as the conditions set in the browsing data are being met. If any one of the browsing conditions, i.e., the browsable page count, one-shot browsing time, or total browsing time, is judged not met, the browsing monitoring program 108e stops the display of the document. The browsing remains unavailable unless and until the browsing setting is canceled in step S104.

Once read into the user's terminal 6, the electronic book desired for browsing by the user can be browsed freely as long as the conditions set in the browsing data are being met. Since the browsing is available only under the predetermined constraints, the electronic book can no longer be read once the user decides not to buy the book. These measures allow electronic books to be browsed as desired by the user while preventing infringement on the copyrights of the authors or of the publishing companies publishing their books. When an electronic book is purchased, its browsing setting need only be canceled and there is no need for the book data to be returned. This affords the user appreciable savings in time and effort upon electronic book purchase. Alternatively, if the number of browsable pages is left unlimited with only browsing time constraints in place, the user may browse through all pages during the one-shot browsing time or total browsing time established in the browsing data. This will give the user an opportunity to scrutinize the desired book to his or her satisfaction. Although the examples above have dealt with the purchase of an entire electronic book, this is not limitative of the invention. The user also may be allowed to purchase or browse through a preferred part (e.g., Chapter 5) of an electronic book.

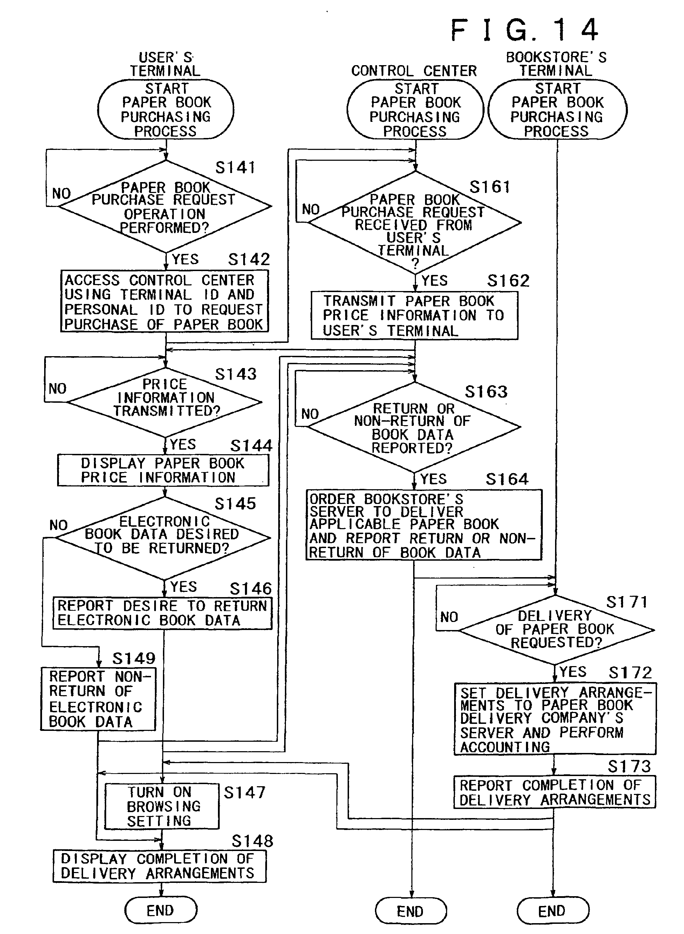

Described below with reference to the flowchart of Fig. 14 is how the user buys a paper book following the purchase of its electronic version in the steps discussed above.

In step S141, the book purchasing program 108a checks to see if a paper book purchasing operation is carried out. The check is repeated until the purchasing operation is judged performed. Illustratively, after an electronic book has been purchased, the BUY button 133 in Fig. 12 is clicked on. The operation is interpreted as a request to purchase the paper version of the book in question, and step S142 is reached.

In step S142, the book purchasing program 108a transmits through the communication unit 109 the terminal ID 108f, personal ID 111a, and an ID identifying the designated book along with the request to purchase the paper version of the book to the control center 2 in accordance with the address (e.g., URL on line 7 in Fig. 9) of the server 3 from which to buy the book in question, the address being found in the browsing data 111c.

In step S161, the transfer program 28m checks to see if a request is made from the user's terminal 6 for the purchase of a paper book. The check is repeated until the paper book purchase request is received.
Illustratively, when the paper book purchase request made in step S142 is judged received in step S161, step S162 is reached.

In step S162, the transfer program 28m receives from the user's terminal 6 through the communication unit 29 the terminal ID 108f, personal ID 111a, the ID identifying the designated book, and the address of the server 3 run by the bookstore from which to buy the book in question, the address being found in the browsing data 111c. The transfer program 28m searches the book list 28i for the designated book based on the book ID, and transmits price information about the paper book in question to the user's terminal 6.

In step S143, the book purchasing program 108a checks to see if price information about the paper book to be purchased is sent from the control center 2. Illustratively, when the price information sent from the control center 2 in step 162 is judged received in step S143, step S144 is reached.

In step S144, the book purchasing program 108a displays two kinds of price information about the book of interest: the price coming into effect if the electronic book data are returned, and the price applicable if the book data are retained. A display screen appears on which the user selects one of the two alternatives. Other kinds of price information may be displayed instead. Illustratively, if the electronic book data are returned, the price for the electronic book data may be subtracted from the price of the paper book so that the user may benefit from an appreciable price reduction.

In step S145, the book purchasing program 108a checks to see if return of the electronic book data is selected. If the return of the book data is judged selected, step S146 is reached. In step S146, the book purchasing program 108a reports to the control center 2 that the electronic book data will be returned.

In step S163, the transfer program 28m checks to see if the return or non-return of the electronic book data is reported. If the return of the electronic book data is selected in step S146 and if the report of the data return is received in step S163, then step S164 is reached. In step S164, the transfer program 28m requests the bookstore's server 3 to deliver to the user the paper book corresponding to the book ID. The request is made with regard to the address of the server 3 run by the bookstore from which to buy the book in question, the address being found in the browsing data 111c. At this point, the transfer program 28m also reports the return or non-return of the electronic book data to the bookstore's server 3.

In step S171, the paper book ordering program 48f of the bookstore's server 3 checks to see if a request is made for the delivery of a paper book. The check is repeated until the paper book delivery request is received. Illustratively, if the paper book delivery request is made in step S164 and if the request is detected in step S171, then step S172 is reached. In step S172, the paper book ordering program 48f requests the paper book delivery company's server 8 through the communication unit 49 to make arrangements for the paper book to be delivered while causing the accounting program to carry out a corresponding accounting process. More specifically, the paper book ordering program 48f searches the customer data 48d for the user's address based on the terminal ID and personal ID received from the user's terminal 6 in step S162, and searches the book list 48e for the paper book to be delivered based on the book ID. The paper book ordering program 48f sends these pieces of information to the paper book delivery company's server 8 to request the delivery. Furthermore, the paper book ordering program 48f finalizes the price of the book depending on the return or non-return of the corresponding electronic book data, and starts up the accounting program 48c causing the accounting server 7 to perform the relevant accounting process for dealing with the price.

In step S173, the paper book ordering program 48f reports to the user's terminal 6 through the communication unit 49 that all the arrangements for the delivery have been completed.

In step S147, the book purchasing program 108a turns on the setting for browsing. In step S148, the book purchasing program 108a indicates on the display unit 107 that the necessary arrangements for the delivery have been completed.

If in step S145 the non-return of the electronic book data is judged selected, step S149 is reached. In step S149, the book purchasing program 108a reports to the control center 2 that the electronic book data will be retained at the terminal. The book purchasing program 108a then skips step S147 to reach step S148.

With the browsing setting turned on in step S147, further browsing becomes impossible now that the restrictive conditions are in effect. Then the electronic book data are effectively considered to have been returned.

The preceding example has shown how the electronic book data are effectively regarded as returned when the setting for browsing electronic book data is turned on. Alternatively, the readability of the electronic book data on the terminal 6 of the user who has purchased the paper version of the book may be canceled in other ways. For example, the electronic book data may be actually sent back to the bookstore's server 3 from which the data were received. As another alternative, the electronic book data may be deleted from the user's terminal 6.

If there exist a plurality of bookstores' servers 3 from which the desired paper book may be purchased, the servers 3 may be checked one by one until a bookstore having the book in stock is found. The server 3 of the bookstore stocked with the book in question may then be requested to make arrangements for the delivery of the book. It is also possible to pick up the paper book delivery company located closest to the user's residence and to get the paper book delivery company's server 8 to make the necessary arrangements for the delivery. Such steps save the user from having to search a number of bookstores for the one with the book in stock or to make additional arrangements for the delivery. Thus the request to have the paper book delivered is issued easily by the user and serviced promptly at reduced cost by the nearest paper book delivery company.

As described, after buying the electronic book data, the user can easily purchase the paper version of the book and have it delivered by the paper book delivery company without having to search for bookstores with the book in stock or without performing additional steps to arrange the delivery. (The paper book delivery company's server 8 receives delivery order information, and the company delivers the book in question to the applicable user based on the received information.)

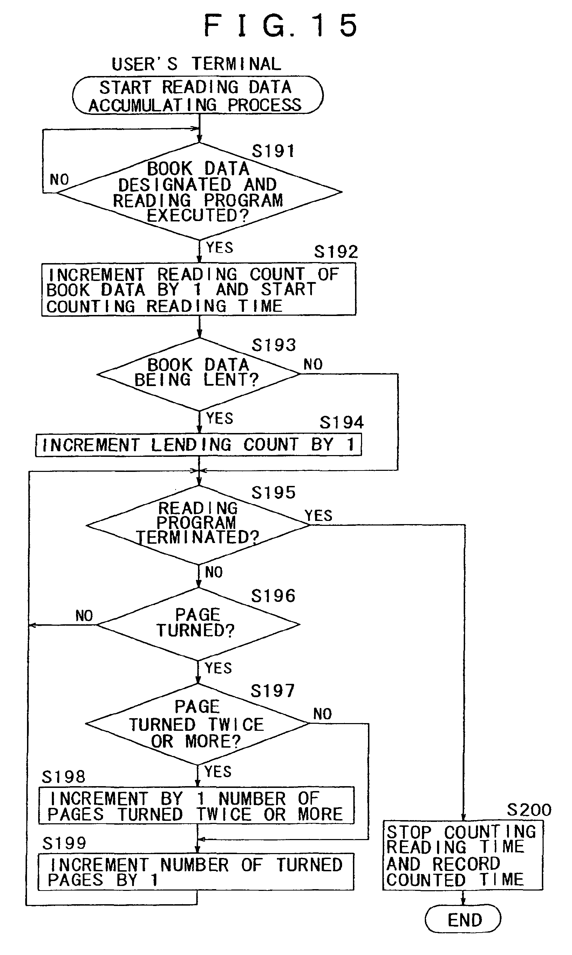

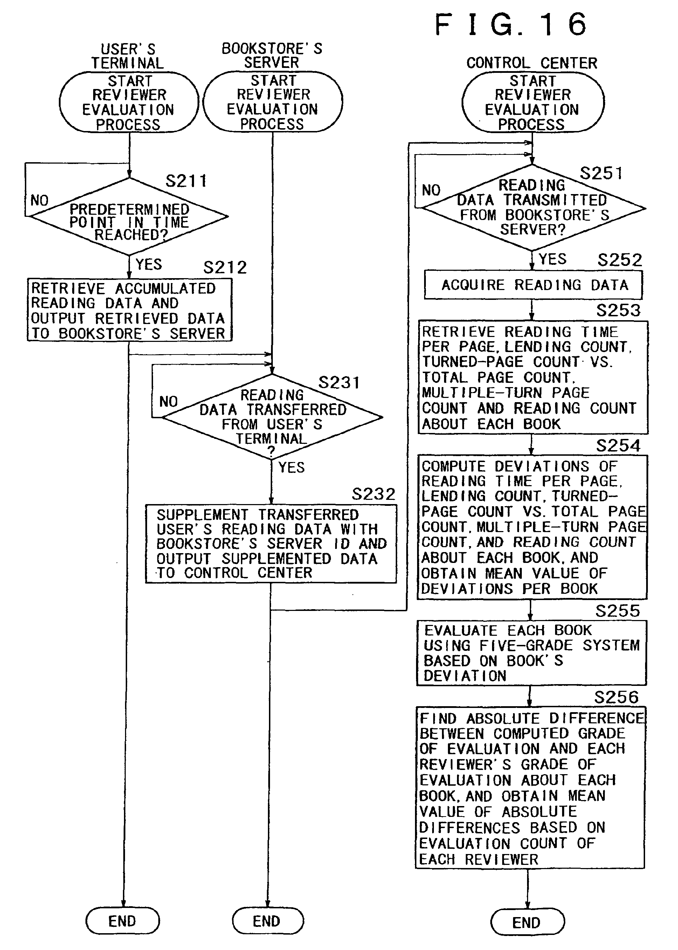

How book reviewers are evaluated will now be described with reference to the flowcharts of Figs. 15 and 16. The processes in these flowcharts primarily involve comparing reviewers' evaluations of books with readers' (users') evaluations on the same books, to find out how close the reviewers' evaluations are to those of the readers. The closer a reviewer's evaluation is to that of the reader on a given book, the more accurate the reviewer's evaluation is considered to be. First to be described with reference to the flowchart of Fig. 15 is how the user at the user's terminal 6 accumulates reading data from reading electronic book data.

In step S191, the reading data management program 108c checks to see if electronic book data are designated and the reading program is executed. The check is repeated until some electronic book data are designated and the reading program starts being executed. In practice, the user operates the input unit 106 to designate desired electronic book data and start up the reading program. Step S191 is followed by step S192.

In step S192, the reading data management program 108c increments the reading count of the designated book by one and starts counting the reading time. In step S193, a check is made to see if the designated electronic book data are lent data. More specifically, the reading data management program 108c first checks to see if the personal ID 111a has been registered in advance. The purchase of any electronic book data is made on the assumption that the personal ID 111a held in the semiconductor memory 111 coincides with that which is registered in conjunction with the terminal ID 108f. If an ID mismatch is detected, that means the electronic book data in the semiconductor memory 111 have been purchased by another user's terminal 6 and are thus lent data. If in step S193 the electronic book data are judged to be lent data, step S194 is reached. The reading data management program 108c increments the lending count by one in step S194 before reaching step S195. If in step S193 the electronic book data are not judged to be lent data, step S194 is skipped and step S195 is reached.

In step S195, the reading data management program 108c checks to see if the reading program 108g is terminated. If the reading program 108g is not judged terminated, step S196 is reached.

In step S196, the reading data management program 108c checks to see if the TURN button 134 is clicked on to turn the page. Control is kept returned to step S195 (i.e., steps S195 and S196 are repeated) until the TURN button 134 is clicked on.

If in step S196 the TURN button 134 is judged clicked on to turn the page, step S197 is reached. In step S197, the reading data management program 108c checks to see if the current page has been turned twice or more. If the current page is judged to have been turned at least twice so far, step S198 is reached. In step S198, the reading data management program 108c increments by one the number of pages turned twice or more in the reading data 111e. Step S198 is followed by step S199. If in step S197 the current page is not judged to have been turned twice or more so far, step S198 is skipped and step S199 is reached.

In step S199, the reading data management program 108c increments the number of turned pages by one, and step S195 is reached again. If in step S195 the reading program 108g is judged terminated illustratively with the END button 132 clicked on, step S200 is reached.

In step S200, the reading data management program 108c stops counting the reading time, writes the counted time into the reading data 111e, and terminates the process.

As described, the reading data management program 108c repeats steps S195 through S199 until the reading program 108g is terminated. During the repeated steps, the number of turned pages and the number of pages turned twice or more are recorded. When the reading program 108g is terminated, the counted time is recorded and the process is brought to an end. This is how the reading data management program 108c creates the reading data 111e.

Described below with reference to the flowchart of Fig. 16 is how the reading data 111e generated in the above-described steps are gathered from a plurality of users' terminals 6 in order to acquire the readers' evaluations of books for comparison with reviewers' evaluations of the same books. The comparing steps constitute a reviewer evaluation process whereby the reviewers are evaluated.

In step S211, the reading data management program 108c of the user's terminal 6 checks to see if a predetermined point in time is reached. The check is repeated until such a point in time is arrived at. The predetermined point in time is illustratively the time at which the user's terminal 6 gains access to the bookstore's server 3 to request transfer of electronic book data as discussed in connection with the flowchart of Fig. 10. The reading data 111e are collected by the bookstore's server 3. The timing may otherwise be established only for the reading data 111e to be sent to the bookstore's server 3. Illustratively, the timing may be set to be periodical (e.g., once a month). That is, the predetermined point in time may be judged to be reached every time the user's terminal 6 accesses the bookstore's server 3 in an automated, periodical manner.

In step S212, the reading data management program 108c transmits the reading data 111e to the bookstore's server 3 through the communication unit 109.

In step S231, the book selling program 48a checks to see if the reading data 111e are transferred from the user's terminal 6. The check is repeated until the reading data 111e are judged transferred from the user's terminal 6. Illustratively, when the reading data 111e transferred from the user's terminal 6 in step S212 are judged received in step S231, step S232 is reached.

In step S232, the book selling program 48a supplements the transmitted user's reading data 111e with the ID identifying the bookstore's server 3, and transfers the whole data to the control center 2 through the communication unit 49.

In step S251, the book evaluation program 28h checks to see if the reading data 111e are sent from the bookstore's server 3. The check is repeated until the reading data 111e are judged to be sent. Illustratively, when the reading data 111e transmitted in step S232 from the bookstore' server 3 are detected in step S251, step S252 is reached in which the transmitted reading data 111e are received through the communication unit 29.

In step S253, the book evaluation program 28h retrieves from the reading data 111e the reading time per page, the lending count, turned-page count versus total page count, multiple-turn page count, and reading count about each book.

In step S254, the book evaluation program 28h computes deviations of the reading time per page, the lending count, turned-page count versus total page count, multiple-turn page count, and reading count about each book after retrieval from the reading data 111e, and obtains a means value of the computed deviations per book.

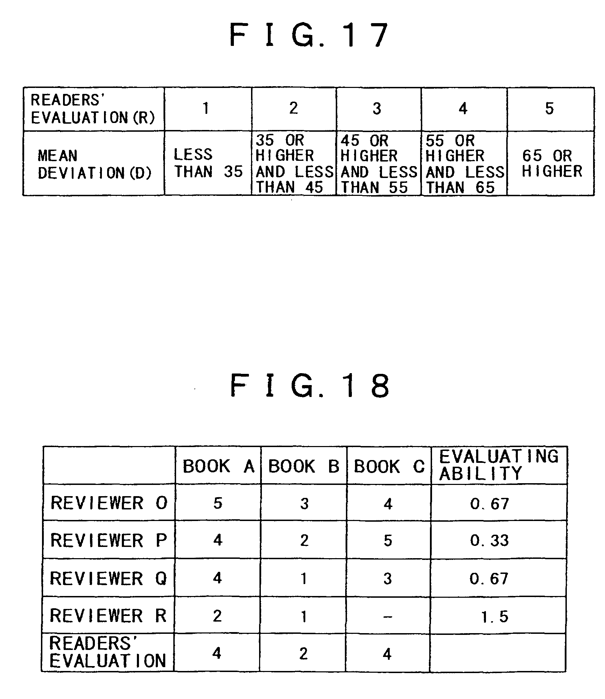

In step S255, the book evaluation program 28h evaluates each book using a five-grade system based on the book's deviation. More specifically, the book evaluation program 28h assigns one of five grades to each book based on the book's deviation as shown in Fig. 17. Illustratively, when the deviation of a book is less than 35, the readers' evaluation of the book is grade 1; when the deviation is 35 or higher and less than 45, the readers' evaluation is grade 2; when the deviation is 45 or higher and less than 55, the readers' evaluation is grade 3; when the deviation is 55 or higher and less than 65, the readers' evaluation is grade 4; when the deviation is 65 or higher, the readers' evaluation is grade 5.

In step S256, the book evaluation program 28h finds an absolute difference between the readers' grade of evaluation and each reviewer's grade of evaluation about each of the books involved, and obtains a mean value of the absolute differences based on each reviewer's book evaluation count. The mean value thus calculated denotes each reviewer's evaluating ability, and is written into the review data 281 (the existing ability records are updated).

More specifically, suppose that reviewers O, P, Q and R evaluate books A, B and C as shown in Fig. 18. Illustratively, the reviewer O gives grade 5 to book A, grade 3 to book B, and grade 4 to book C; the reviewer P allots grade 4 to book A, grade 2 to book B, and grade 5 to book C; the reviewer Q awards grade 4 to book A, grade 1 to book B, and grade 3 to book C; the reviewer R assigns grade 2 to book A, grade 1 to book B, and no grade (-) to book C. Meanwhile, the readers collectively grant grade 4 to book A, grade 2 to book B, and grade 4 to book C. The higher the grade, the higher the evaluation of the book is considered to be. The absolute difference between the reviewer O's grade and the readers' grade is 1 on book A, 1 on book B, and 0 on book C. Thus the mean value of the absolute differences is 0.67 (=(1 + 1 + 0)/3), which represents the reviewer O's evaluating ability. Likewise, the absolute difference between the reviewer P's grade and the readers' grade is 0 on book A, 0 on book B, and 1 on book C. The mean value of the absolute differences is then 0.33 (=(0 + 0 + 1)/3), which denotes the reviewer O's evaluating ability. The absolute difference between the reviewer Q's grade and the readers' grade is 0 on book A, 1 on book B, and 1 on book C. The mean value of the absolute differences is 0.67 (=(0 + 1 + 1)/3), which indicates the reviewer Q's evaluating ability. The absolute difference between the reviewer R's grade and the readers' grade is 2 on book A, 1 on book B, and no count on book C because of the absence of evaluation of the book by the reviewer. The mean value of the absolute differences is 1.5 (=(2 + 1)/2), which is representative of the reviewer R's evaluating ability. The above computations show that the closer a reviewer's evaluation is to the readers' evaluation, the higher the reviewer's evaluating ability. (The closer the reviewer's grades of evaluation are to the readers', the more acceptable the reviewer's evaluation is to the readers.) The computations objectively define the ranking of the reviewers: the reviewer P is ranked first, followed by the reviewers O and Q in second place, and the reviewer R is in third place.

As a result of the comparisons between the reviewers' evaluations of given books and the readers' evaluations of the same books, the reviewers themselves are evaluated on an objective scale. This makes it easy for the readers to find reviewers of high evaluating abilities. By referencing to such reviewers' book reviews, the readers may pick up books that are highly evaluated on an objective basis. In the publishing industry, suitable reviewers who would be asked to recommend books can be readily found based on their ranking. It then becomes easy to choose good reviewers for the books to be effectively promoted. In addition, collecting data based on the bookstores' IDs provides a clear picture of the individual bookstores' sales figures.

There are some points to be noted regarding the processing discussed above. In step S212 above, the reading data 111e should preferably be given advance approval by the user for transfer from the user's terminal 6 to the bookstore's server 3 because the data concern the user's privacy. Preferably, the user may be prompted to give such advance approval or some other explicit confirmation of the reading data transfer.

The series of processes described above may be executed either by hardware or by software. For software-based processing to take place, programs constituting the software may be either incorporated beforehand in dedicated hardware of a computer or installed upon use from a suitable program storage medium into a general-purpose personal computer or like equipment capable of executing diverse functions.

The storage medium is offered to users not only as the storage units 28, 48, 68, 88 and 108 which contain the relevant programs and which are built in the control center 2 in Fig. 2, bookstore's server 3 in Fig. 4, author's terminal 4 in Fig. 5, publishing company's server 5 in Fig. 6, and user's terminal 6 in Fig. 7 of the inventive system; but also as a package medium apart from the computers involved in the form of the magnetic discs 211, 231, 251, 271, and 291 (including flexible discs); optical discs 212, 232, 252, 272 and 292 (including CD-ROM (compact disc-read only memory) and DVD (digital versatile disc)); magneto-optical discs 213, 233, 253, 273 and 293 (including MD (Mini-disc; registered trademark)); or the semiconductor memories 214, 234, 254, 274 and 294 (including Memory Stick) containing the necessary programs for the users.

In this specification, the steps which are stored on a program storage medium and which describe the programs to be executed represent not only the processes that are carried out in the depicted sequence (i.e., on a time series basis) but also processes that are conducted parallelly or individually.

In this specification, the term "system" refers to an entire configuration made up of a plurality of component units and devices.

### INDUSTRIAL APPLICABILITY

As described, where the first information processing apparatus, the first information processing method, and the first program of this invention are in use, electronic book data are first supplemented with browsing display control data for controlling a browsing display of the electronic book data on a second information processing apparatus. The electronic book data supplemented with the browsing display control data are encrypted using a first key set uniquely for the electronic book data. The first key is encrypted using a second key set uniquely for the second information processing apparatus. The electronic book data supplemented with the browsing display control data and encrypted using the first key are delivered to the second information processing apparatus together with the first key encrypted using the second key.

Where the second information processing apparatus, the second information processing method, and the second program of this invention are in use, a browsing display of electronic book data is first given. The electronic book data supplemented with browsing control data for controlling the browsing display and encrypted using a first key are received. The first key encrypted using a second key is received. The first key is decrypted using the second key. The encrypted electronic book data supplemented with the browsing control data are decrypted using the decrypted first key. The browsing display of the electronic book data is then given based on the decrypted browsing control data.

Where the information processing system, the information processing method for use with the system, and the third program according to this invention are in use, a first information processing apparatus of the system supplements electronic book data with browsing display control data for controlling a browsing display of the electronic book data on a second information processing apparatus of the system. The electronic book data supplemented with the browsing display control data are encrypted using a first key set uniquely for the electronic book data. The first key is encrypted using a second key set uniquely for the second information processing apparatus. The electronic book data supplemented with the browsing display control data and encrypted using the first key are delivered to the second information processing apparatus together with the first key encrypted using the second key. The browsing display of the electronic book data is given on the second information processing apparatus. The electronic book data supplemented with the browsing control data for controlling the browsing display and encrypted using the first key are received. The first key encrypted using the second key is received. The first key is decrypted using the second key. The encrypted electronic book data supplemented with the browsing control data are decrypted using the decrypted first key. The browsing display of the electronic book data is then given based on the decrypted browsing control data.

With such steps and means implemented as described, any of these embodiments of the present invention allows their users to browse through and scrutinize electronic books to their satisfaction.

## Claims

1. An information processing apparatus for delivering electronic book data to a second information processing apparatus over a network, said information processing apparatus comprising:
browsing display control data supplementing means for supplementing said electronic book data with browsing display control data for controlling a browsing display of said electronic book data on said second information processing apparatus;
first encrypting means for encrypting said electronic book data supplemented with said browsing display control data, using a first key set uniquely for said electronic book data;
second encrypting means for encrypting said first key using a second key set uniquely for said second information processing apparatus; and
delivering means for delivering to said second information processing apparatus said electronic book data supplemented with said browsing display control data and encrypted using said first key, together with said first key encrypted using said second key.

2. The information processing apparatus according to claim 1, wherein said browsing display control data include control data for controlling a browsable page count, a one-shot browsing time, or a total browsing time for said browsing display of said electronic book data on said second information processing apparatus; and
wherein, if any one of said browsable page count, said one-shot browsing time, and said total browsing time is exceeded during said browsing display, said control data restrict said browsing display of said electronic book data on said second information processing apparatus.

3. The information processing apparatus according to claim 2, further comprising:
purchase request receiving means for receiving purchase request information about said electronic book data from said second information processing apparatus requesting the purchase of said electronic book data;
selling means for performing a selling process based on the purchase request; and
third key transmitting means for transmitting to said second information processing apparatus a third key for canceling the restriction of said browsing display on said second information processing apparatus.

4. An information processing method for use with an information processing apparatus for delivering electronic book data to a second information processing apparatus over a network, said information processing method comprising the steps of:
supplementing said electronic book data with browsing display control data for controlling a browsing display of said electronic book data on said second information processing apparatus;
encrypting firstly said electronic book data supplemented with said browsing display control data, using a first key set uniquely for said electronic book data;
encrypting secondly said first key using a second key set uniquely for said second information processing apparatus; and
delivering to said second information processing apparatus said electronic book data supplemented with said browsing display control data and encrypted using said first key, together with said first key encrypted using said second key.

5. A program for use with a computer which controls an information processing apparatus for delivering electronic book data to a second information processing apparatus over a network, said program causing said computer to execute the steps of:
supplementing said electronic book data with browsing display control data for controlling a browsing display of said electronic book data on said second information processing apparatus;
encrypting firstly said electronic book data supplemented with said browsing display control data, using a first key set uniquely for said electronic book data;
encrypting secondly said first key using a second key set uniquely for said second information processing apparatus; and
delivering to said second information processing apparatus said electronic book data supplemented with said browsing display control data and encrypted using said first key, together with said first key encrypted using said second key.

6. An information processing apparatus for receiving delivery of electronic book data from a second information processing apparatus over a network, said information processing apparatus comprising:
browsing display giving means for giving a browsing display of said electronic book data;
first receiving means for receiving said electronic book data supplemented with browsing control data for controlling said browsing display and encrypted using a first key;
second receiving means for receiving said first key encrypted using a second key;
first decrypting means for decrypting said first key using said second key; and
second decrypting means for decrypting the encrypted electronic book data supplemented with said browsing control data, using said first key decrypted by said first decrypting means;
wherein said browsing display giving means gives said browsing display of said electronic book data based on the decrypted browsing control data.

7. The information processing apparatus according to claim 6, wherein said browsing control data include control data for controlling a browsable page count, a one-shot browsing time, or a total browsing time for said browsing display of said electronic book data; and
wherein, if any one of said browsable page count, said one-shot browsing time, and said total browsing time is exceeded during said browsing display, said browsing display giving means restricts said browsing display of said electronic book data.

8. The information processing apparatus according to claim 7, further comprising:
purchase request information transmitting means for transmitting purchase request information about said electronic book data to said second information processing apparatus; and
third key receiving means for receiving from said second information processing apparatus a third key for canceling the restriction of said browsing display upon completion of a purchasing process following the transmission of said purchase request information;
wherein said browsing display giving means cancels said restriction of said browsing display using said third key.

9. An information processing method for use with an information processing apparatus for receiving delivery of electronic book data from a second information processing apparatus over a network, said information processing method comprising the steps of:
giving a browsing display of said electronic book data;
receiving firstly said electronic book data supplemented with browsing control data for controlling said browsing display and encrypted using a first key;
receiving secondly said first key encrypted using a second key;
decrypting firstly said first key using said second key; and
decrypting secondly the encrypted electronic book data supplemented with said browsing control data, using said first key decrypted in said first decrypting step;
wherein said browsing display giving step gives said browsing display of said electronic book data based on the decrypted browsing control data.

10. A program for use with a computer which controls an information processing apparatus for receiving delivery of electronic book data from a second information processing apparatus over a network, said program causing said computer to execute the controlling steps of:
giving a browsing display of said electronic book data;
receiving firstly said electronic book data supplemented with browsing control data for controlling said browsing display and encrypted using a first key;
receiving secondly said first key encrypted using a second key;
decrypting firstly said first key using said second key; and
decrypting secondly the encrypted electronic book data supplemented with said browsing control data, using said first key decrypted in said first decrypting step;
wherein said browsing display giving step gives said browsing display of said electronic book data based on the decrypted browsing control data.

11. An information processing system comprising a first and a second information processing apparatus,
wherein said first information apparatus includes:
browsing display control data supplementing means for supplementing said electronic book data with browsing display control data for controlling a browsing display of said electronic book data on said second information processing apparatus;
first encrypting means for encrypting said electronic book data supplemented with said browsing display control data, using a first key set uniquely for said electronic book data;
second encrypting means for encrypting said first key using a second key set uniquely for said second information processing apparatus; and
delivering means for delivering to said second information processing apparatus said electronic book data supplemented with said browsing display control data and encrypted using said first key, together with said first key encrypted using said second key; and
wherein said second information processing apparatus includes:
browsing display giving means for giving said browsing display of said electronic book data;
first receiving means for receiving said electronic book data supplemented with said browsing control data for controlling said browsing display and encrypted using said first key;
second receiving means for receiving said first key encrypted using said second key;
first decrypting means for decrypting said first key using said second key; and
second decrypting means for decrypting the encrypted electronic book data supplemented with said browsing control data, using said first key decrypted by said first decrypting means;
wherein said browsing display giving means gives said browsing display of said electronic book data based on the decrypted browsing control data.

12. An information processing method for use with an information processing system comprising a first and a second information processing apparatus,
wherein said information processing method in control of said first information apparatus comprises the steps of:
supplementing said electronic book data with browsing display control data for controlling a browsing display of said electronic book data on said second information processing apparatus;
encrypting firstly said electronic book data supplemented with said browsing display control data, using a first key set uniquely for said electronic book data;
encrypting secondly said first key using a second key set uniquely for said second information processing apparatus; and
delivering to said second information processing apparatus said electronic book data supplemented with said browsing display control data and encrypted using said first key, together with said first key encrypted using said second key; and
wherein said information processing method in control of said second information processing apparatus comprises the steps of:
giving said browsing display of said electronic book data;
receiving firstly said electronic book data supplemented with said browsing control data for controlling said browsing display and encrypted using said first key;
receiving secondly said first key encrypted using said second key;
decrypting firstly said first key using said second key; and
decrypting secondly the encrypted electronic book data supplemented with said browsing control data, using said first key decrypted in said first decrypting step;
wherein said browsing display giving step gives said browsing display of said electronic book data based on the decrypted browsing control data.

13. A program for use with a computer which controls an information processing system comprising a first and a second information processing apparatus,
wherein said program causes said computer in control of said first information apparatus to execute the controlling steps of:
supplementing said electronic book data with browsing display control data for controlling a browsing display of said electronic book data on said second information processing apparatus;
encrypting firstly said electronic book data supplemented with said browsing display control data, using a first key set uniquely for said electronic book data;
encrypting secondly said first key using a second key set uniquely for said second information processing apparatus; and
delivering to said second information processing apparatus said electronic book data supplemented with said browsing display control data and encrypted using said first key, together with said first key encrypted using said second key; and
wherein said program causes said computer in control of said second information processing apparatus to execute the controlling steps of:
giving said browsing display of said electronic book data;
receiving firstly said electronic book data supplemented with said browsing control data for controlling said browsing display and encrypted using said first key;
receiving secondly said first key encrypted using said second key;
decrypting firstly said first key using said second key; and
decrypting secondly the encrypted electronic book data supplemented with said browsing control data, using said first key decrypted in said first decrypting step;
wherein said browsing display giving step gives said browsing display of said electronic book data based on the decrypted browsing control data.
